# EUROPEAN PATENT APPLICATION

(11) **EP 4 325 611 A1**
(43) Date of publication of application: **21.02.2024**
(21) Application number: 22899071.9
(22) Date of filing: 24.11.2022
(51) Int. Cl.: H01M 10/04, H01M 50/538, H01M 10/42, H01M 10/0587, B26D 1/157, B26D 5/08, B26D 7/08

(54) **ELECTRODE ASSEMBLY, METHOD AND APPARATUS FOR MANUFACTURING SAME, CYLINDRICAL BATTERY COMPRISING ELECTRODE ASSEMBLY, AND BATTERY PACK AND VEHICLE COMPRISING CYLINDRICAL BATTERY**

(30) Priority: 24.11.2021 KR 20210163807; 26.08.2022 KR 20220107707
(71) Applicant: LG Energy Solution, Ltd., Seoul 07335 (KR)
(72) Inventor: CHUNG, Joo-Young, Daejeon 34122 (KR); KIM, Jin-Gon, Daejeon 34122 (KR); JUNG, Su-Taek, Daejeon 34122 (KR); KIM, Tae-Jong, Daejeon 34122 (KR); LEE, Byeong-Kyu, Daejeon 34122 (KR)
(74) Representative: Goddar, Heinz J.
(86) International application number: PCT/KR2022/018772
(87) International publication number: WO 2023/096389

(57) **Abstract**

Disclosed is an electrode assembly and a manufacturing method and apparatus thereof, a cylindrical battery including the electrode assembly, and a battery pack and a vehicle including the same. In the electrode assembly, two electrodes and a separator interposed therebetween are wound around one axis to define a core and an outer circumference of the electrode assembly, at least one of the electrodes includes an uncoated portion provided at a long side end and exposed beyond the separator along an axial direction, a winding turn region of the uncoated portion is provided at one end of the electrode assembly, the winding turn region includes a cut portion and a bent portion alternately disposed along a circumferential direction of the electrode assembly, an axial height of the cut portion is smaller than an axial height of the bent portion, the bent portion includes a plurality of uncoated portion flags arranged along a radial direction of the electrode assembly, and the plurality of uncoated portion flags overlap along the axial direction to define a bending surface region along the radial direction of the electrode assembly.

## Description

### TECHNICAL FIELD

The present disclosure relates to an electrode assembly and a manufacturing method and apparatus thereof, a cylindrical battery including the electrode assembly, and a battery pack and a vehicle including the same.

The present application claims priority to Korean Patent Application No. 10-2021-0163807 filed on November 24, 2021, and Korean Patent Application No. 10-2022-0107707 filed on August 26, 2022 in the Republic of Korea, the disclosures of which are incorporated herein by reference.

### BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no byproducts are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery, namely a unit battery, has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit secondary battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 or a form factor 2170, resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collector is welded to the uncoated portion to improve the current collecting efficiency.

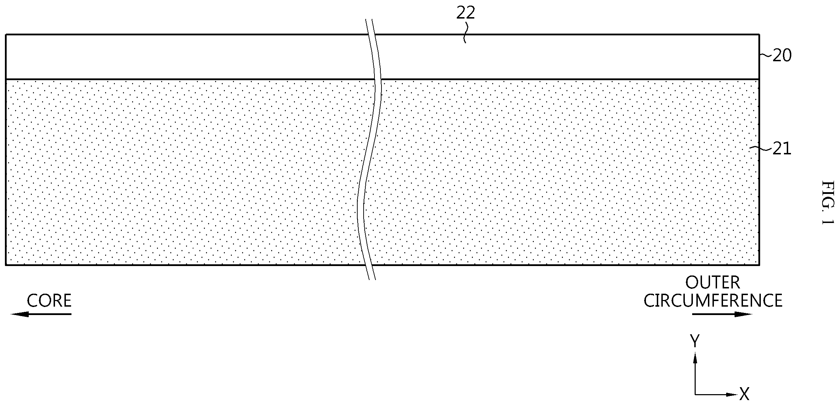

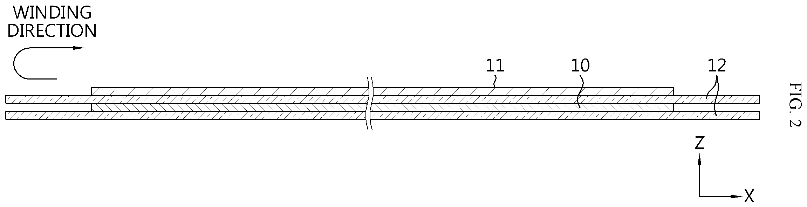

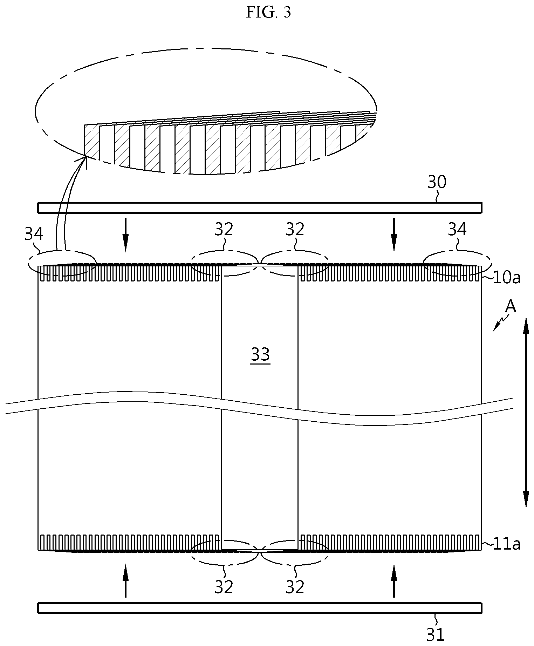

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collecting plate to a bent surface of an uncoated portion.

Referring to FIGS. 1 to 3, a positive electrode 10 and a negative electrode 11 have a structure in which a sheet-shaped current collector 20 is coated with an active material 21, and include an uncoated portion 22 at one long side along the winding direction X.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions based on the short side direction of the separator 12. The positions of the positive electrode 10 and the negative electrode 11 may be changed opposite to those shown in the drawings.

After the winding process, the uncoated portion 10a of the positive electrode 10 and the uncoated portion 11a of the negative electrode 11 are bent toward the core. After that, current collecting plates 30, 31 are welded and coupled to the uncoated portions 10a, 11a, respectively.

An electrode tab is not separately coupled to the positive electrode uncoated portion 10a and the negative electrode uncoated portion 11a, the current collecting plates 30, 31 are connected to external electrode terminals, and a current path is formed with a large cross-sectional area along the winding axis direction of electrode assembly A (see arrow, which has an advantage of lowering the resistance of the battery. This is because resistance is inversely proportional to the cross-sectional area of the path through which the current flows.

In the tab-less cylindrical battery, in order to improve the welding characteristics between the uncoated portions 10a, 11a and the current collecting plates 30, 31, a strong pressure must be applied to the welding points of the uncoated portions 10a, 11a to bend the uncoated portions 10a, 11a as flat as possible.

When bending the uncoated portions 10a, 11a, a jig that presses the uncoated portions 10a, 11a toward the core of the electrode assembly A is used.

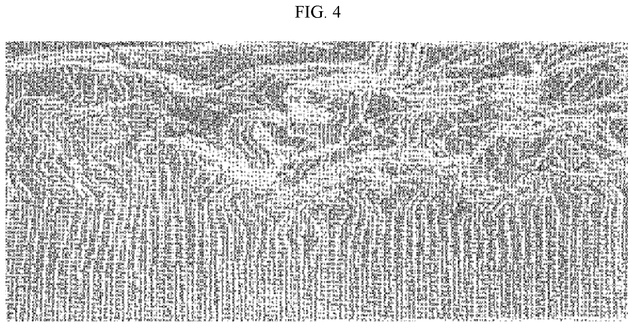

FIG. 4 is an enlarged photograph showing a bent shape of the uncoated portions 10a, 11a by cutting a part of the bent portion in the longitudinal direction of the electrode assembly A when the uncoated portions 10a, 11a are bent toward the core along the radial direction using a jig.

As shown in FIG. 4, the bent shapes of the uncoated portions 10a, 11a are not uniform, and it may be found that the uncoated portions 10a, 11a are irregularly deformed and bent. In particular, the degree of deformation of the uncoated portions 10a, 11a increases toward the core of the electrode assembly A. The reason is that the stress applied by the jig increases as the uncoated portions 10a, 11a are located closer to the core of the electrode assembly A.

If the uncoated portions 10a, 11a are irregularly bent, the current collecting plates 30, 31 are not easily welded because the bent surface is not flat. In addition, if the uncoated portions 10a, 11a are irregularly deformed under the bent surface, the stress causing the irregular deformation of the uncoated portions 10a, 11a affects the separator located near, which may cause the separator to tear or the active material layer to break, resulting in an internal short circuit. When an internal short circuit occurs, the temperature of the cylindrical battery rises rapidly as overcurrent flows, and as a result, the cylindrical battery may ignite or explode.

### DISCLOSURE

### Technical Problem

The present disclosure is designed to solve the problems of the related art, and therefore the present disclosure is directed to providing an electrode assembly manufacturing method and apparatus capable of making a uniform bent shape of an uncoated portion of a tab-less cylindrical battery when bending the uncoated portion, and an electrode assembly manufactured by the method and apparatus.

The present disclosure is also directed to providing a cylindrical battery including the electrode assembly manufactured by the improved method.

The present disclosure is also directed to providing an electrode assembly with improved energy density, reduced resistance, and improved electrolyte impregnability.

The present disclosure is also directed to providing a cylindrical battery including the electrode assembly having an improved structure, a battery pack including the cylindrical battery, and a vehicle including the battery pack.

The technical objects to be solved by the present disclosure are not limited to the above, and other objects not mentioned herein will be clearly understood by those skilled in the art from the following disclosure.

### Technical Solution

In one aspect of the present disclosure, there is provided an electrode assembly in which a positive electrode, a negative electrode, and a separator interposed therebetween are wound based on one axis to define a core and an outer circumference, wherein at least one of the positive electrode and the negative electrode includes an uncoated portion provided at a long side end and exposed to the outside of the separator along an axial direction of the electrode assembly, a winding turn region of the uncoated portion is provided at one end of the electrode assembly, the winding turn region includes a cut portion and a bent portion alternately disposed along a circumferential direction, an axial height of the cut portion is smaller than an axial height of the bent portion, the bent portion includes a plurality of uncoated portion flags arranged along a radial direction of the electrode assembly, and the plurality of uncoated portion flags overlap along the axial direction to form a bending surface region along the radial direction of the electrode assembly.

The cut portion may include a first cut surface substantially perpendicular to the axial direction. The first cut surface may be an ultrasonic cut surface.

An insulating coating layer may be provided at a proximal end of the uncoated portion flag, an axial end of the insulating coating layer may extend and be exposed to the outside of an axial end of the separator, and the first cut surface may be spaced apart from the axial end of the insulating coating layer.

When viewed in the axial direction, the axial end of the insulating coating layer and an axial end of an active material layer included in the positive electrode or the negative electrode may be exposed through the first cut surface.

The plurality of uncoated portion flags may protrude from the first cut surface along the axial direction.

The plurality of uncoated portion flags may be bent toward the core of the electrode assembly along a bending line spaced apart from the first cut surface to form a bending surface region.

A bending length of the uncoated portion flag closest to the core of the electrode assembly may be less than or equal to a distance from the position of the corresponding uncoated portion flag to the core.

The first cut surface may be spaced apart from the bending surface region.

The bent portion may include a second cut surface extending along a side of the plurality of uncoated portion flags. The second cut surface may be an ultrasonic cut surface.

The second cut surface may be parallel to the axial direction.

The first cut surface and the second cut surface may intersect perpendicularly to each other.

The second cut surface may be a flat surface.

The second cut surface may be a rounded surface.

The eccentricity of an arc where the rounded surface meets a virtual plane perpendicular to the axial direction may be substantially 1.

A center of a virtual circle containing the arc and a core center of the electrode assembly may be opposite to each other based on the arc.

The arc may be substantially symmetrical based on a straight line connecting a center of a virtual circle containing the arc and a core center of the electrode assembly.

The plurality of uncoated portion flags may have substantially the same width in the circumferential direction from the core of the electrode assembly toward the outer circumference.

Widths of the plurality of uncoated portion flags in the circumferential direction may gradually increase or decrease from the core of the electrode assembly toward the outer circumference.

The cut portion may include first to n^{th} cut portions, and the first to n^{th} cut portions may extend radially based on a core center of the electrode assembly.

The first to n^{th} cut portions may be arranged rotationally symmetrically based on the core center of the electrode assembly.

The bent portion may include first to n^{th} bent portions, and the first to n^{th} bent portions may extend radially based on a core center of the electrode assembly.

The first to n^{th} bent portions may be arranged rotationally symmetrically based on the core center of the electrode assembly.

The bending surface region may include a region in which three or more uncoated portion flags overlap along the axial direction.

In another aspect of the present disclosure, there is also provided a method for manufacturing an electrode assembly, comprising: (a) preparing a positive electrode and a negative electrode having a sheet shape and having an uncoated portion at a long side end; (b) forming an electrode-separator stack by stacking the positive electrode, the negative electrode and a separator at least once with the separator being interposed between the positive electrode and the negative electrode so that the positive electrode uncoated portion and the negative electrode uncoated portion are exposed opposite to each other along a short side direction of the separator; (c) winding the electrode-separator stack based on one axis to form an electrode assembly so that a winding turn region of the positive electrode uncoated portion and a winding turn region of the negative electrode uncoated portion are exposed in opposite directions along the axial direction; (d) cutting at least one of the winding turn region of the positive electrode uncoated portion and the winding turn region of the negative electrode uncoated portion, such that at least one bending target area remains in a protruding shape along the axial direction, thereby to form a plurality of uncoated portion flags in the bending target area; and (e) forming a bending surface region by bending the plurality of uncoated portion flags included in the bending target area along the radial direction of the electrode assembly.

The step (d) may include a first cutting step of cutting an edge of the bending target area along the axial direction of the electrode assembly; and a second cutting step of cutting a region around the bending target area in a direction perpendicular to the axial direction so that the bending target area remains in a protruding shape along the axial direction.

In the first cutting step, the edge of the bending target area may be cut using a vertical cutter that vibrates ultrasonically in the axial direction of the electrode assembly.

A plurality of cutting lines may be provided at the edge of the bending target area, and when viewed in the axial direction of the electrode assembly, the plurality of cutting lines may be paired by two and radially extended based on a core center of the electrode assembly.

A plurality of cutting lines may be provided at the edge of the bending target area, and when viewed in the axial direction of the electrode assembly, each of the plurality of cutting lines may have an arc shape curved toward a core center of the electrode assembly.

In the second cutting step, the region around the bending target area may be cut perpendicular to the axial direction using a horizontal cutter that vibrates ultrasonically perpendicular to the axial direction of the electrode assembly, so that the bending target area remains in a protruding shape along the axial direction.

In the second cutting step, the region around the bending target area may be cut perpendicular to the axial direction using a horizontal cutter that rotates in a plane perpendicular to the axial direction of the electrode assembly, so that the bending target area remains in a protruding shape along the axial direction.

In the second cutting step, the region around the bending target area may be cut perpendicular to the axial direction using a horizontal cutter that rotates in a plane perpendicular to the axial direction of the electrode assembly and vibrates ultrasonically along the plane, so that the bending target area remains in a protruding shape along the axial direction.

In the step (e), the plurality of uncoated portion flags may be bent so that a region in which three or more uncoated portion flags overlap along the axial direction is included in the bending surface region.

In another aspect of the present disclosure, there is also provided an ultrasonic cutting device, which cuts and processes a winding turn region of an uncoated portion exposed at one end of an electrode assembly in which a positive electrode and a negative electrode having an uncoated portion at a long side end, and a separator interposed therebetween are wound around one axis, the ultrasonic cutting device comprising: a vertical cutter configured to ultrasonically cut edges of a plurality of bending target areas, which are disposed along a circumferential direction of the electrode assembly, along an axial direction to form a plurality of uncoated portion flags in the bending target areas; and a horizontal cutter configured to ultrasonically cut a region around the plurality of bending target areas perpendicularly to the axial direction so that the plurality of uncoated portion flags protrude from an ultrasonic cut surface along the axial direction.

The vertical cutter may include a cutter body; and a plurality of cutter knives coupled to the cutter body, wherein the plurality of cutter knives may be arranged to correspond to the edges of the plurality of bending target areas.

The horizontal cutter may include a cutter body; and a cutter knife coupled to the cutter body, wherein the cutter knife may be coupled to the cutter body so as to be placed on a cutting plane perpendicular to the axial direction and have a shape corresponding to a winding turn region between bending target areas adjacent in the circumferential direction.

The winding turn region between the bending surface regions adjacent in the circumferential direction may include a portion curved toward the core of the electrode assembly, and the cutter knife may be a disk-shaped rotary knife having a radius substantially equal to the radius of curvature of the curved portion.

In another aspect of the present disclosure, there is also provided a cylindrical battery comprising: (a) an electrode assembly in which a positive electrode, a negative electrode, and a separator interposed therebetween are wound based on one axis to define a core and an outer circumference, wherein at least one of the positive electrode and the negative electrode includes an uncoated portion exposed to the outside of the separator along an axial direction of the electrode assembly at a long side end, a winding turn region of the uncoated portion is provided at one end of the electrode assembly, the winding turn region includes a cut portion and a bent portion alternately disposed along a circumferential direction, an axial height of the cut portion is smaller than an axial height of the bent portion, the bent portion includes a plurality of uncoated portion flags arranged along a radial direction of the electrode assembly, and the plurality of uncoated portion flags overlap along the axial direction to form a bending surface region along the radial direction of the electrode assembly; (b) a battery housing having an open end and a closed portion opposite thereto so that the electrode assembly is accommodated through the open end, the battery housing being electrically connected to the negative electrode; (c) a sealing body configured to seal the open end of the battery housing; (d) a terminal electrically connected to the positive electrode and having a surface exposed to the outside; and (e) a current collecting plate welded to the bending surface region and electrically connected to any one of the battery housing and the terminal.

The terminal may be a rivet terminal installed in a perforated hole formed in the closed portion of the battery housing, and an insulating gasket may be interposed between the rivet terminal and the perforated hole.

The rivet terminal may be welded to the current collecting plate.

The current collecting plate may include a support portion having a hole; at least one leg portion extending along a radial direction from the support portion and welded to the bending surface region; a connection portion provided inside the hole; and a bridge portion configured to connect the support portion and the connection portion.

The cylindrical battery may further comprise a crimping portion formed by bending the open end of the battery housing toward the core, wherein the sealing body may include a cap for covering the open end of the battery housing and a sealing gasket interposed between the cap and the open end, and the crimping portion may compress the sealing gasket toward an edge of the cap.

The cylindrical battery may further comprise a beading portion provided in a region adjacent to the open end of the battery housing, wherein at least a part of an edge of the current collecting plate may be interposed between an inner surface of the beading portion and the sealing gasket and coupled to the inner surface of the beading portion.

At least a part of the edge of the current collecting plate may be welded to the inner surface of the beading portion.

The current collecting plate may include a support portion; at least one leg portion extending along a radial direction from the support portion and welded to the bending surface region; and a housing connection portion extending from the support portion or the leg portion toward the beading portion and coupled to the inner surface of the beading portion.

The cap may correspond to the terminal, and the current collecting plate may include a support portion; at least one leg portion extending outward from the support portion and welded to the bending surface region; and a lead portion extending from the support portion or the leg portion and coupled to the cap.

In another aspect of the present disclosure, there is also provided a battery pack, comprising a plurality of cylindrical batteries described above, and a vehicle, comprising the battery pack.

### Advantageous Effects

According to one aspect of the present disclosure, since the bending target area of the uncoated portion having a protruding shape along the axial direction of the electrode assembly is formed in a pattern extending along the bending direction and the uncoated portion flags of the bending target area are bent, it is possible to improve the flatness of the bent surface of the uncoated portion and alleviate the irregular bending of the uncoated portion at the bottom of the bent surface.

According to another aspect of the present disclosure, by cutting a significant portion of the winding turn region of the uncoated portion in the peripheral area of the bending target area at the axial end of the electrode assembly to provide a passage through which the electrolyte can quickly penetrate into the active material layer, it is possible to improve the electrolyte impregnation.

According to another aspect of the present disclosure, since the axial height of the electrode assembly may be reduced by cutting and bending the winding turn region of the uncoated portion, the energy density of the cylindrical battery may be increased accordingly.

According to another aspect of the present disclosure, since the plurality of uncoated portion flags formed in the bending target area in the process of cutting the winding turn region of the uncoated portion are bent along the radial direction of the electrode assembly to form a bending surface region in which the uncoated portion flags overlap in several layers and then the current collecting plate is welded to the corresponding area, it is possible to lower the resistance of the cylindrical battery.

According to still another aspect of the present disclosure, by providing an ultrasonic cutting device including a vertical cutter and a horizontal cutter, the winding turn region of the uncoated portion may be easily cut so that the bending target area remains protruded in the axial direction of the electrode assembly.

According to still another aspect of the present disclosure, by providing a method for easily cutting the winding turn region of the uncoated portion so that the bending target area remains protruded in the axial direction of the electrode assembly, it is possible to improve productivity and save manufacturing cost of the electrode assembly.

According to still another aspect of the present disclosure, by providing a large-capacity battery pack manufactured using cylindrical batteries having high energy density and low resistance and a vehicle including the same, it is possible to improve the safety of rapid charging and the efficiency of energy use.

In addition, the present disclosure may have several other effects, and such effects will be described in each embodiment, or any description that can be easily inferred by a person skilled in the art will be omitted for an effect.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used for manufacturing a conventional tab-less cylindrical battery.
FIG. 2 is a diagram showing an electrode winding process of the conventional tab-less cylindrical battery.
FIG. 3 is a diagram showing a process of welding a current collecting plate to a bent surface of an uncoated portion in the conventional tab-less cylindrical battery.
FIG. 4 is an enlarged photograph showing a bending structure of the uncoated portion in the cross section of the conventional electrode assembly.
FIG. 5 is a plan view showing the structure of an electrode according to an embodiment of the present disclosure.
FIG. 6a is a cross-sectional view showing a jelly-roll type electrode assembly in which the electrode according to an embodiment of the present disclosure is applied to a positive electrode and a negative electrode, taken along an axial direction Y.
FIG. 6b is a partial perspective view showing an upper structure of the electrode assembly according to an embodiment of the present disclosure.
FIG. 6c is a partial cross-sectional view showing a bending target area of the electrode assembly according to an embodiment of the present disclosure, taken along the axial direction Y.
FIG. 6d is a top plan view showing a cutting structure of a winding turn region provided on an upper portion of an electrode assembly according to another embodiment of the present disclosure.
FIG. 7 is a plan view showing a vertical cutter used when cutting the winding turn region along the axial direction Y according to an embodiment of the present disclosure.
FIG. 8 is a cross-sectional view showing the vertical cutter used when cutting the winding turn region along the axial direction Y according to an embodiment of the present disclosure.
FIG. 9 is a diagram schematically showing the configuration of an ultrasonic cutting device according to an embodiment of the present disclosure.
FIGS. 10 to 12 are plan views showing vertical cutters according to various modifications of the present disclosure.
FIG. 13 is a plan view showing a horizontal cutter used when cutting the winding turn region perpendicular to the axial direction Y according to an embodiment of the present disclosure.
FIG. 14 is a cross-sectional view showing the horizontal cutter used when cutting the winding turn region perpendicular to the axial direction Y according to an embodiment of the present disclosure.
FIG. 15 is a plan view showing a horizontal cutter including a rotary knife according to another embodiment of the present disclosure.
FIG. 16 is a cross-sectional view showing the horizontal cutter including a rotary knife according to another embodiment of the present disclosure.
FIG. 17 is a plan view showing a state after forming a cutting line in the winding turn region of the electrode assembly using the vertical cutter according to an embodiment of the present disclosure.
FIG. 18 is a diagram showing a process of cutting the winding turn region in a plane (XZ plane) perpendicular to the axial direction Y of the electrode assembly using the horizontal cutter according to an embodiment of the present disclosure.
FIG. 19 is a plan view showing a state after forming a cutting line in the winding turn region of the electrode assembly using the vertical cutter according to another embodiment of the present disclosure.
FIG. 20 is a diagram showing a process of cutting the winding turn region in a plane (XZ plane) perpendicular to the axial direction Y of the electrode assembly using the horizontal cutter including a rotary knife according to an embodiment of the present disclosure.
FIGS. 21 to 24 are top plan views showing an arrangement structure of the bending target area after the winding turn region is cut according to an embodiment of the present disclosure.
FIG. 25a is a cross-sectional view showing a cylindrical battery according to an embodiment of the present disclosure, taken along an axial direction Y.
FIG. 25b is a plan view showing the structure of a first current collecting plate according to an embodiment of the present disclosure.
FIG. 25c is a plan view showing the structure of a second current collecting plate according to an embodiment of the present disclosure.
FIG. 26a is a cross-sectional view showing a cylindrical battery according to another embodiment of the present disclosure, taken along the axial direction Y.
FIG. 26b is a plan view showing the structure of a first current collecting plate according to another embodiment of the present disclosure.
FIG. 26c is a perspective view showing the structure of a second current collecting plate according to another embodiment of the present disclosure.
FIG. 27 is a diagram schematically showing a battery pack according to an embodiment of the present disclosure.
FIG. 28 is a diagram schematically showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help understanding of the present disclosure, the accompanying drawings are not drawn to scale, and the dimensions of some components may be exaggerated. In addition, the same reference numerals may be assigned to the same elements in different embodiments.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

Hereinafter, when an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Also, singular expressions used in this specification include plural expressions unless the context clearly indicates otherwise. In this application, terms such as "including" or "comprising" should not be construed as necessarily including all of the various components or steps described in the specification, and it should be construed that some of the components or some of the steps may not be included, or additional components or steps may be further included.

Throughout the specification, "A and/or B" refers to either A or B or both A and B unless expressly stated otherwise, and "C to D" refers to C or greater and D or smaller unless expressly stated otherwise.

For convenience of description, a direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction Z. Among them, in particular, the direction that gets closer to the winding axis is referred to as a centripetal direction, and the direction that faces away from the winding axis is referred to as a centrifugal direction.

First, an electrode assembly according to an embodiment of the present disclosure will be described. The electrode assembly is a jelly-roll type electrode assembly in which a positive electrode and a negative electrode having a sheet shape and a separator interposed therebetween are wound in one direction.

Preferably, at least one of the positive electrode and the negative electrode includes an uncoated portion not coated with an active material at a long side end in the winding direction. At least a part of the uncoated portion is used as an electrode tab by itself.

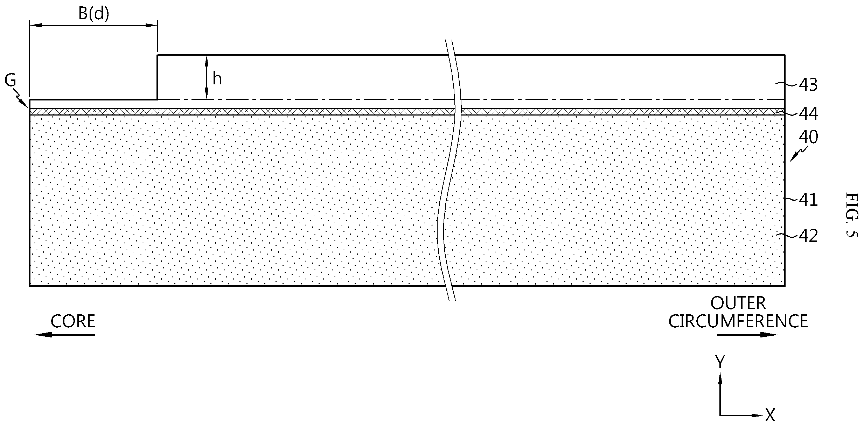

FIG. 5 is a plan view showing a structure of an electrode 40 according to an embodiment of the present disclosure.

Referring to FIG. 5, the electrode 40 includes a current collector 41 made of metal foil and an active material layer 42. The metal foil may be a metal with conductivity. The metal foil may be aluminum or copper, and is appropriately selected according to the polarity of the electrode 40. The active material layer 42 is formed on at least one surface of the current collector 41 and includes an uncoated portion 43 at the long side end in the winding direction X. The uncoated portion 43 is a region not coated with the active material. An insulating coating layer 44 may be formed at a boundary between the active material layer 42 and the uncoated portion 43. The insulating coating layer 44 is formed such that at least a part thereof overlaps with the boundary between the active material layer 42 and the uncoated portion 43. The insulating coating layer 44 may include a polymer resin and an inorganic filler such as SiO₂ and Al₂O₃. The polymer resin may have a porous structure. The polymer resin is not particularly limited as long as it is an insulating material. The polymer resin may be polyolefin, polyimide, polyethylene terephthalate, polybutylene fluoride, or the like, but the present disclosure is not limited thereto.

Preferably, a part of the uncoated portion 43 adjacent to the core may be cut through a notching process. In this case, even if the uncoated portion 43 is bent toward the core, the core of the electrode assembly is not blocked by the bent portion of the uncoated portion 43. For reference, the core has a cavity created by removing a bobbin used when winding the electrode assembly. The cavity may be used as an electrolyte injection passage or a passage for inserting a welding jig. In the drawing, a dashed-dotted line indicates the lowest position at which the uncoated portion 43 is bent. The uncoated portion 43 is bent at the dashed-dotted line or above.

The cut portion B of the uncoated portion 43 forms a plurality of winding turns in a radial direction when the electrode 40 is wound. The plurality of winding turns have a predetermined width in the radial direction. Preferably, the width (d) of the cut portion B and the bending length (h) of the uncoated portion 43 may be adjusted such that the predetermined width is equal to or greater than the bending length (h) of the uncoated portion 43. Then, even if the uncoated portion 43 is bent, the core of the electrode assembly is not blocked.

In order to prevent the active material layer 42 and/or the insulating coating layer 44 from being damaged when the cut portion B of the uncoated portion 43 is formed, it is preferable to place a gap G between the cutting line and the insulating coating layer 44. The gap G is preferably 0.2 mm to 4 mm. When the gap G is adjusted within the corresponding numerical range, it is possible to prevent the active material layer 42 and/or the insulating coating layer 44 from being damaged due to a cutting tolerance when the uncoated portion 43 is cut.

In a specific example, when the electrode 40 is used to manufacture an electrode assembly of a cylindrical battery having a form factor of 4680, the width (d) of the uncoated portion cut portion B may be set to 180 mm to 350 mm depending on the diameter of the core of the electrode assembly.

Meanwhile, when the core of the electrode assembly is not used in an electrolyte injection process, a welding process, or the like, the cut portion B of the uncoated portion 43 may not be formed.

The electrode 40 of the above embodiment may be applied to a positive electrode and/or a negative electrode included in a jelly-roll type electrode assembly. In addition, when the electrode structure of this embodiment is applied to any one of the positive electrode and the negative electrode, the conventional electrode structure (FIG. 1) may be applied to the other one. In addition, the electrode structures applied to the positive electrode and the negative electrode may not be the same and may be different.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula A[AₓM_{y}]O_{2+z} (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; and the stoichiometric coefficients x, y and z are selected so that the compound maintains electrical neutrality).

In another example, the positive electrode active material may be an alkali metal compound xLiM¹O₂-(1-x)Li₂M²O₃ disclosed in US6,677,082, US6,680,143, et al., wherein M¹ includes at least one element having an average oxidation state 3; M² includes at least one element having an average oxidation state 4; and 0≤x≤1).

In still another example, the positive electrode active material may be lithium metal phosphate expressed by a general formula LiₐM¹ₓFe₁₋ₓM²_{y}P_{1-y}M³_{z}O_{4-z} (M¹ includes at least one element selected from the Ti, Si, Mn, Co, Fe, V, Cr, Mo, Ni, Nd, Al, Mg and Al; M² includes at least one element selected from Ti, Si, Mn, Co, Fe, V, Cr, Mo, Ni, Nd, Al, Mg, Al, As, Sb, Si, Ge, V and S; M³ includes a halogen element optionally including F; 0 < a ≤2, 0 ≤ x ≤ 1, 0 ≤ y < 1, 0 ≤ z < 1; the stoichiometric coefficient a, x, y and z are selected so that the compound maintains electrical neutrality), or Li₃M₂(PO₄)₃ [M includes at least one element selected from Ti, Si, Mn, Fe, Co, V, Cr, Mo, Ni, Al, Mg and Al].

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as TiO₂ and SnO₂ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

At least one surface of the separator may include a coating layer of inorganic particles. It is also possible that the separator itself is made of a coating layer of inorganic particles. The particles constituting the coating layer may have a structure coupled with a binder so that interstitial volumes exist among adjacent particles.

The inorganic particles may be made of an inorganic material having a dielectric constant of 5 or more. The inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃, PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrode 40 according to an embodiment of the present disclosure may be applied to a positive electrode and a negative electrode of a j elly-roll type electrode assembly.

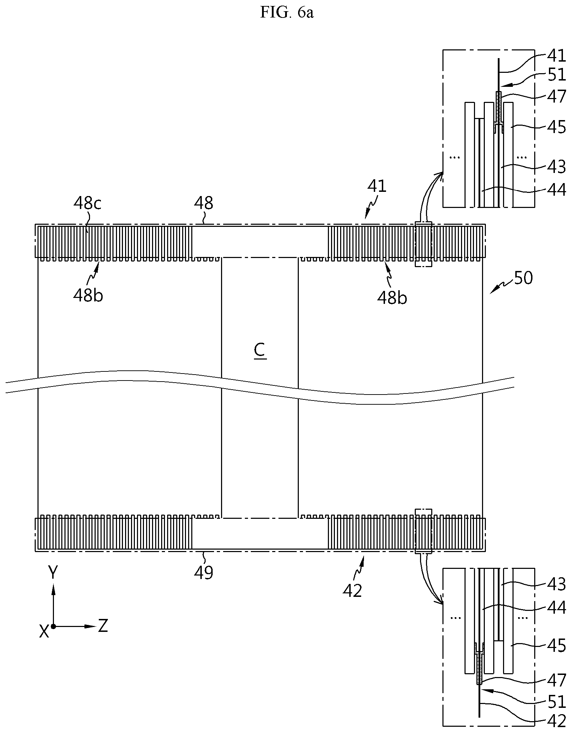

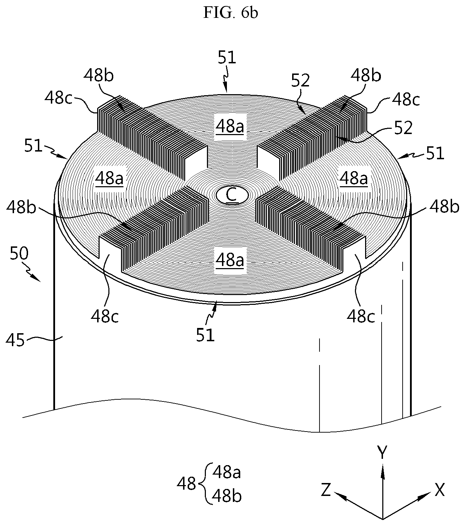

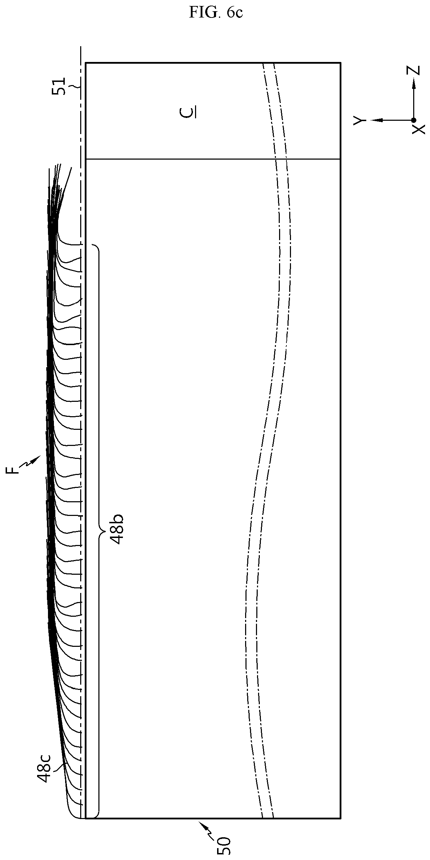

FIG. 6a is a cross-sectional view showing a jelly-roll type electrode assembly 50 in which the electrode 40 according to an embodiment of the present disclosure is applied to a positive electrode and a negative electrode, taken along an axial direction Y, FIG. 6b is a partial perspective view showing an upper structure of the electrode assembly 50 according to an embodiment of the present disclosure, and FIG. 6c is a partial cross-sectional view showing a state in which a plurality of uncoated portion flags 48c included in the bending target area of the electrode assembly 50 are bent along the radial direction Z, taken along the axial direction Y.

Referring to FIG. 6a, the electrode assembly 50 may be manufactured by the winding method described with reference to FIG. 2. The uncoated portion 41 protruding above the electrode assembly 50 extends from the positive electrode 43. The uncoated portion 42 protruding below the electrode assembly 50 extends from the negative electrode 44.

A winding turn region 48 formed by winding the uncoated portion 41 of the positive electrode 43 is provided in the upper portion of the electrode assembly 50. Similarly, a winding turn region 49 formed by winding the uncoated portion 42 of the negative electrode 44 is provided in the lower portion of the electrode assembly 50. The winding turn regions 48, 49 are exposed to the outside of the separator 45 along the axial direction Y.

The separator 45 is interposed between the positive electrode 43 and the negative electrode 44. A length of the active material coating region of the positive electrode 43 in the Y-axis direction may be smaller than a length of the active material coating region of the negative electrode 44 in the Y-axis direction. Accordingly, the active material coating region of the negative electrode 44 may extend longer along the Y-axis direction than the active material coating region of the positive electrode 43.

Preferably, the insulating coating layer 47 formed in the boundary between the active material region and the uncoated portion of the positive electrode 43 and the negative electrode 44 may extend to the end of the separator 45 or may be exposed to the outside from the end. When the insulating coating layer 47 is exposed to the outside of the separator 45, it may serve to support a bending point when the uncoated portion 41, 42 is bent. If the bending point is supported, the stress applied to the active material layer and the separator 45 when the uncoated portion 41, 42 is bent is relieved. In addition, the insulating coating layer 47 may prevent the positive electrode 43 and the negative electrode 44 from contacting each other and causing a short circuit.

The positive electrode 43 includes a current collector and an active material coating layer formed on at least one surface thereof, and the current collector (uncoated portion 41) may have a thickness of 180 um to 220 um. The negative electrode 44 includes a current collector and an active material coating layer formed on at least one surface thereof, and the current collector (uncoated portion 42) may have a thickness of 140 um to 180 um. The separator 45 is interposed between the positive electrode 43 and the negative electrode 44, and may have a thickness of 8 um to 18 um.

In the winding structure of the positive electrode 43, the interval of the uncoated portions 41 located in the winding turns adjacent in the radial direction may be 350 um to 380 um. In addition, in the winding structure of the negative electrode 44, the interval of the uncoated portions 42 located on the winding turns adjacent in the radial direction may be 350 um to 380 um.

In the electrode assembly 50, the number of winding turns of the positive electrode 43 varies depending on the form factor of the cylindrical battery, and may be 48 to 56. The number of winding turns of the negative electrode 44 also varies depending on the form factor of the cylindrical battery, and may be 48 to 56.

The uncoated portions 41, 42 are longer than the uncoated portion applied to the design of a small cylindrical battery. Preferably, the uncoated portions 41, 42 may have a size of 6 mm or more, optionally 7 mm or more, optionally 8 mm or more, optionally 9 mm or more, optionally 10 mm or more, optionally 11 mm or more, or optionally 12 mm or more.

Referring to FIG. 6b, the winding turn region 48 of the positive electrode 43 includes a cut portion 48a and a bent portion 48b alternately disposed along the circumferential direction X. The height of the cut portion 48a in the axial direction Y is smaller than the height of the bent portion 48b in the axial direction Y. The region near the core C of the electrode assembly 50 does not include the bent portion 48b. This is because the uncoated portion at the core of the positive electrode 43 has a low height (see FIG. 5).

The bent portion 48b includes a plurality of uncoated portion flags 48c arranged along the radial direction Z of the electrode assembly 50. The plurality of uncoated portion flags 48c have substantially the same width in the circumferential direction from the core of the electrode assembly 50 toward the outer circumference. Alternatively, the widths of the plurality of uncoated portion flags 48c in the circumferential direction may gradually increase from the core of the electrode assembly 50 toward the outer circumference. In this case, the bent portion 48b may have a substantially fan shape when viewed in the axial direction Y.

The cut portion 48a may include first to n^{th} cut portions. The first to n^{th} cut portions may be arranged rotationally symmetrically based on the center of the core C of the electrode assembly 50. Similarly, the bent portion 48b may include first to n^{th} bent portions. In addition, the first to n^{th} bent portions may be arranged rotationally symmetrically based on the center of the core C of the electrode assembly C. Rotational symmetry means a symmetry in which the structures are the same when the electrode assembly 50 is rotated at a predetermined angle along the winding direction.

In an embodiment, n is 4 because the number of cut portions 48a and bent portions 48b is four. In addition, the four cut portions 48a and the four bent portions 48b form 90 degree rotational symmetry based on the center of the core C of the electrode assembly 50.

Meanwhile, n may decrease or increase to 2, 3, 5, 6, 9, or the like. Therefore, the rotational symmetry angle may be changed to 180 degrees, 120 degrees, 75 degrees, 60 degrees, 40 degrees, or the like according to the value of n.

Referring to FIG. 6c, the plurality of uncoated portion flags 48c are bent along the radial direction Z of the electrode assembly 50 while overlapping along the axial direction Y, thereby forming a flat bending surface region F.

Even if the plurality of uncoated portion flags 48c are bent, the core C of the electrode assembly 50 is not blocked. To this end, the bending length of the uncoated portion flag 48c closest to the core C may be equal to or smaller than the distance from the point where the corresponding uncoated portion flag 48c is located to the core C.

The bending surface region F may be used as a welding region of the current collecting plate. The bending surface region F includes a region where the uncoated portion flags 48c are overlapped in several layers along the axial direction Y to achieve sufficient welding strength.

Referring to FIGS. 6a and 6b, the cut portion 48a may include a first cut surface 51 substantially perpendicular to the axial direction Y. The first cut surface 51 may be an ultrasonic cut surface formed by cutting the winding turn region 48 provided to the upper portion of the electrode assembly 50 perpendicularly to the axial direction Y by an ultrasonic cutting device.

An insulating coating layer 47 may be provided at a proximal end of the plurality of uncoated portion flags 48c, and an end of the insulating coating layer 47 in the axial direction Y may extend outward and be exposed from an end of the separator 45 in the axial direction Y. The first cut surface 51 may be spaced apart from the end of the insulating coating layer 47 in the axial direction Y by an amount corresponding to a cutting tolerance. The end of the insulating coating layer 47 in the axial direction Y and the axial end of the active material layer included in the negative electrode 44 may be exposed through the first cut surface 51 when viewed in the axial direction Y. Therefore, the electrolyte may directly contact the axial end of the active material layer included in the negative electrode 44 and the end of the insulating coating layer 47 in the axial direction Y through the first cut surface 51, thereby remarkably improving the impregnation property (speed and uniformity).

Referring to FIG. 6c, the plurality of uncoated portion flags 48c may protrude upward from the first cut surface 51 along the axial direction Y. The plurality of uncoated portion flags 48c included in the bent portion 48b are bent toward the core C of the electrode assembly 50 along a bending line spaced apart from the first cut surface 51 to form a bending surface region F. The first cut surface 51 may be spaced apart from the bending surface region F in the axial direction Y due to the location of the bending line.

Referring to FIG. 6b, the bent portion 48b includes a second cut surface 52 extending along the side of the plurality of uncoated portion flags 48c. The second cut surface 52 may be an ultrasonic cut surface formed by cutting the winding turn region 48 provided on the electrode assembly 50 along the axial direction by an ultrasonic cutting device. Therefore, the second cut surface 52 has a state parallel to the axial direction Y. In addition, the second cut surface 52 is a flat surface and perpendicularly intersects the first cut surface 51.

In the present disclosure, the cutting structure of the winding turn region 48 provided on the upper portion of the electrode assembly 50 may be modified in various ways.

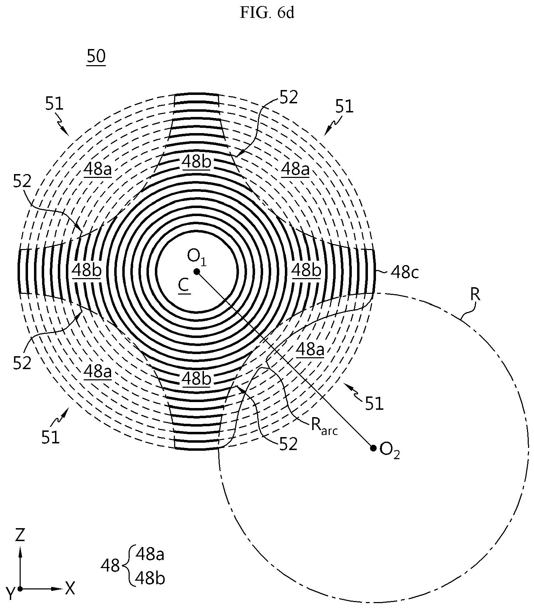

FIG. 6d is a top plan view showing another cutting structure of the winding turn region 48 provided on an upper portion of the electrode assembly 50.

Referring to FIG. 6d, the second cut surface 52 may perpendicularly intersect the first cut surface 51 and have a round shape. The configuration of the ultrasonic cutting device for forming the second cut surface 52 with a round surface shape will be described later.

The eccentricity of an arc (R_{arc}) where the second cut surface 52 meets a virtual plane perpendicular to the axial direction Y may be substantially 1. That is, the arc (R_{arc}) may correspond to the arc of a virtual circle R indicated by a dashed-dotted line. The core center (O₁) of electrode assembly 50 and the center (O₂) of the virtual circle R may face each other based on the arc (R_{arc}). In addition, the arc (R_{arc}) may be substantially symmetrical based on a straight line connecting the core center (O₁) of the electrode assembly 50 and the center (O₂) of the virtual circle R.

When the second cut surface 52 is formed as a round surface, the circumferential widths of the uncoated portion flags 48c gradually decrease from the core of the electrode assembly 50 toward the outer circumference. In this case, there is an advantage in securing a wide welding area of the current collecting plate by extending the bending surface region F.

The structure of the winding turn region 48 described with reference to FIGS. 6a to 6d may be substantially equally applied to the winding turn region 49 of the uncoated portion of the negative electrode 44 exposed to the lower portion of the electrode assembly 50. Therefore, the embodiments of the winding turn region 49 of the uncoated portion of the negative electrode 44 will not be described in detail.

The structure of the winding turn regions 48, 49 provided on the upper and lower portions of the electrode assembly 50 may be formed by cutting the winding turn regions 48, 49 along the axial direction Y of the electrode assembly 50 and then cutting along the direction Z perpendicular to the axial direction Y. Of course, it is obvious that the order of cutting can be reversed.

Hereinafter, cutting along the axial direction Y is referred to as 'vertical cutting', and cutting in the direction Z perpendicular to the axial direction is referred to as 'horizontal cutting' .

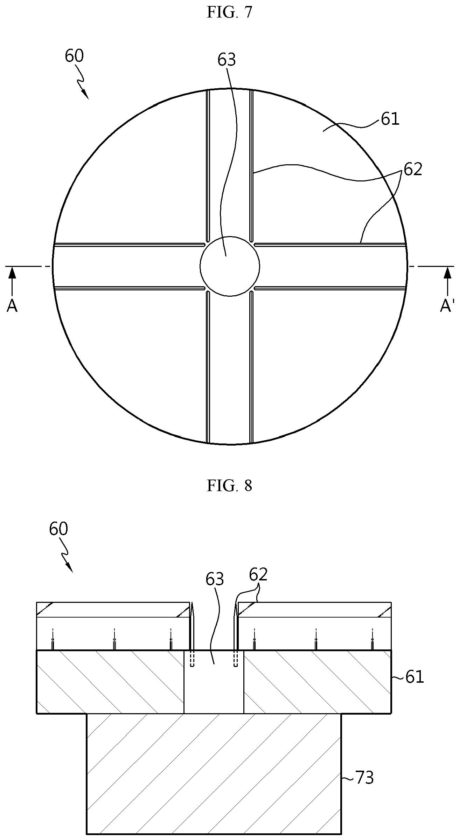

FIGS. 7 and 8 are diagrams showing the structure of a vertical cutter 60 used for vertically cutting the winding turn regions 48, 49 according to an embodiment of the present disclosure. Here, FIG. 7 is a plan view of the vertical cutter 60 and FIG. 8 is a cross-sectional view of the vertical cutter 60, taken along the line A-A' of FIG. 7.

Referring to FIGS. 7 and 8, the vertical cutter 60 includes a cutter body 61 and a plurality of cutter knives 62, and the cutter body 61 may have grooves into which the plurality of cutter knives 62 are inserted and fixed. Preferably, the cutter body 61 may be coupled to a horn 63 of an ultrasonic cutting device. The ultrasonic cutting device will be described later.

Preferably, the cutter body 61 is made of a metal material, such as aluminum alloy, titanium alloy, carbon steel, or the like. The cutter knife 62 is made of a metal material such as carbon steel, alloy iron, high-speed steel, cast alloy, cermet, cubic boron nitride, ceramic, diamond, or the like.

The lower end of the plurality of cutter knives 62 may be embedded in the cutter body 61. Alternatively, the lower end of the cutter knife 62 may be inserted into the groove formed in the cutter body 61 and then welded to the cutter body 61.

Each of the cutter knives 62 has a strip shape extending outward from the center portion of the cutter body 61 and standing vertically with respect to the surface of the cutter body 61.

The plurality of cutter knives 62 may be arranged to correspond to an edge of the plurality of bending target areas (bent portions).

Preferably, the plurality of cutter knives 62 may be paired by two and extend in parallel outward from the center portion of the cutter body 61. A region between the two cutter knives 62 extending in parallel is a region corresponding to the bending target area (bent portion) of the winding turn region.

The plurality of cutter knives 62 may be paired by two and extend radially with respect to the center of the cutter body 61, and the angles between the pairs of cutter knives 62 may be substantially the same.

In one example, the number of cutter knives 62 may be 8 in total. In this case, the pairs of radially extending cutter knives 62 form an angle of 90 degrees to each other. As will be explained later, the radially extending shape of the pairs of cutter knives 62 may be modified in various ways.

The vertical cutter 60 ultrasonically cuts the edge of the plurality of bending target areas (bent portions) disposed along the circumferential direction along the axial direction Y. Then, as shown in FIG. 6b, while the second cut surface 52 parallel to the axial direction Y is formed along the edge of the plurality of bending target areas (bent portions), a plurality of uncoated portion flags 48c may be defined in the bending target areas (bent portions).

The vertical cutter 60 may be included in the ultrasonic cutting device.

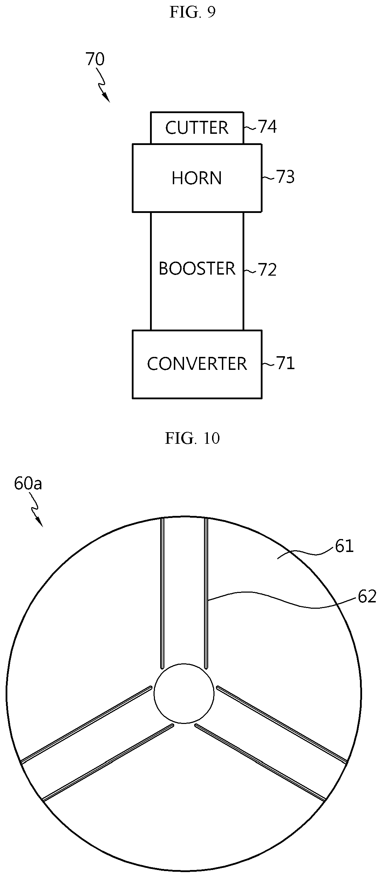

FIG. 9 is a diagram schematically showing the configuration of an ultrasonic cutting device 70 according to an embodiment of the present disclosure.

Referring to FIG. 9, the ultrasonic cutting device 70 according to an embodiment may include a converter 71, a booster 72, a horn 73, and a cutter 74.

The converter 71 generates ultrasonic vibrations. The converter 71 may include a ceramic vibrator to generate ultrasonic waves. The booster 72 amplifies the ultrasonic wave generated by the converter 71 and transmits it to the horn 73. The horn 73 transmits the ultrasonic vibration amplified by the booster 72 to the cutter 74. Preferably, the cutter 74 may be the vertical cutter 60 described above. In this case, the lower portion of the cutter body 61 of the vertical cutter 60 may be coupled to the horn 73 by bolt/nut fastening, riveting, welding, or the like. When the horn 73 to which the cutter 74 is coupled is moved in the axial direction Y while being brought into contact with the winding turn regions 48, 49, the winding turn regions 48, 49 are cut in the axial direction Y by the ultrasonically vibrating cutter 74.

Although not shown, the ultrasonic cutting device 70 may further include a station to which a work piece is fixed, as a mechanical and/or electronic mechanism for linear movement and/or rotational movement of the horn 73; and/or a servo motor and/or a linear motor and/or an air cylinder supporting linear movement and/or rotational movement of the horn 73; and/or a driving source thereof; and/or an electronic control device thereof.

The configurations of the converter 71, the booster 72, and the horn 73 of the ultrasonic cutting device 70 are widely known in the art. In addition, it is obvious to those skilled in the art that various components necessary for linear movement and/or rotational movement of the horn 73 may be additionally coupled to the ultrasonic cutting device 70.

It will be understood by those skilled in the art that the structure of the vertical cutter 60 may be modified into various forms.

FIGS. 10 to 12 are plan views showing vertical cutters 60a, 60b, 60c according to various modifications of the present disclosure.

Referring to FIGS. 10 to 12, the vertical cutter 60a may have a structure in which the pair of cutter knives 62 radially extend while forming an angle of 120 degrees to each other. In addition, the vertical cutter 60b may have a structure in which the pairs of cutter knives 62 extend radially while forming an angle of 180 degrees to each other.

In another modified example, the vertical cutter 60c may include a cutter knife 62 having an arc shape recessed toward the center portion of the cutter body 61. The arc shape corresponds to the arc of a circle with an eccentricity of 1. The arc shape of the cutter knife 62 may have point symmetry, left-right symmetry, or top-bottom symmetry based on the center portion of the cutter body 61. Although the cutter knives 62 have an arc shape, the cutter knives 62 have a radially extending structure based on the center portion of the cutter body 61. The number of arc-shaped cutter knives 62 is not limited to 4, but may be adjusted to 2 or 3. In this case, the cutter knives 62 are preferably arranged at equal intervals in the circumferential direction of the cutter body 61.

A cross-sectional structure of the cutter knives 62 included in the vertical cutters 60a, 60b, 60c of various embodiments is substantially the same as that shown in FIG. 8, and the cutter knives 62 may be used as the cutter 74 of the ultrasonic cutting device 70. In this case, the cutter body 61 may be coupled to the horn 73 of the ultrasonic cutting device 70.

Meanwhile, according to an embodiment of the present disclosure, the winding turn regions 48, 49 respectively provided on the upper and lower portions of the electrode assembly 50 are cut along the axial direction Y by the vertical cutters 60, 60a, 60b, 60c, and then the region around the bending target area may be cut perpendicularly to the axial direction Y so that the bending target area (bent portion) remains in a protruding shape along the axial direction Y.

Preferably, the region around the bending target area may be cut by the horizontal cutter 80.

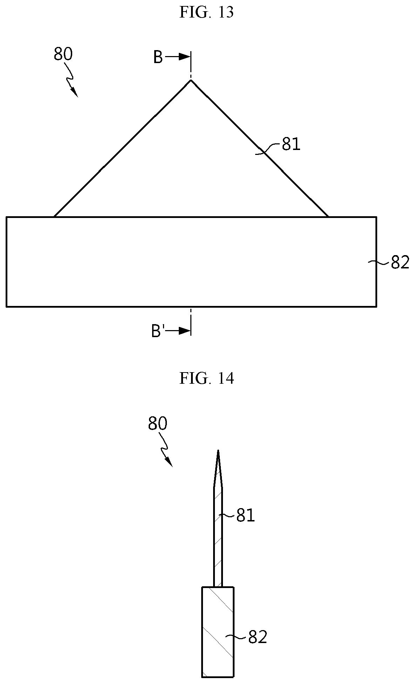

FIG. 13 is a plan view showing one example of the horizontal cutter 80 according to an embodiment of the present disclosure, and FIG. 14 is a cross-sectional view along the line B-B'.

Referring to FIGS. 13 and 14, the horizontal cutter 80 may include a cutter knife 81 and a cutter body 82. The horizontal cutter 80 may ultrasonically cut a region around the plurality of bending target areas spaced apart in the circumferential direction in a direction perpendicular to the axial direction Y. When the region around the plurality of bending target areas is ultrasonically cut by the horizontal cutter 80, the plurality of uncoated portion flags 48c protrude along the axial direction Y from the first cut surface 51 as shown in FIG. 6b.

The cutter knife 81 may have a polygonal shape. Preferably, the polygonal shape may correspond to the shape of the area to be cut. That is, the cutter knife 81 may be coupled to the cutter body 82 so as to be placed on a cutting plane perpendicular to the axial direction Y of the electrode assembly 50 and have a shape corresponding to the winding turn region between bending target areas (bent portions) adjacent in the circumferential direction.

In one example, when the shape of the area to be cut is a right triangle, the cutter knife 81 has a right triangle shape. In another example, when the shape of the area to be cut is an isosceles triangle in which the internal angle of the vertex facing the hypotenuse is an obtuse angle greater than 90 degrees (for example, 120 degrees), the cutter knife 81 also has an obtuse isosceles triangle shape. In another example, when the shape of the area to be cut is an acute isosceles triangle in which the interior angle of the vertex facing the hypotenuse is less than 90 degrees (for example, 60 degrees), the cutter knife 81 also has an acute isosceles triangle shape. Like the cutter knife 62 of the vertical cutter 60, the lower portion of the cutter knife 81 may be embedded in the cutter body 82 or welded to the cutter body 82.

As shown in FIG. 6b, the cutter knife 81 of the horizontal cutter 80 may form a first cut surface 51 that perpendicularly meets the second cut surface 52 having a flat surface.

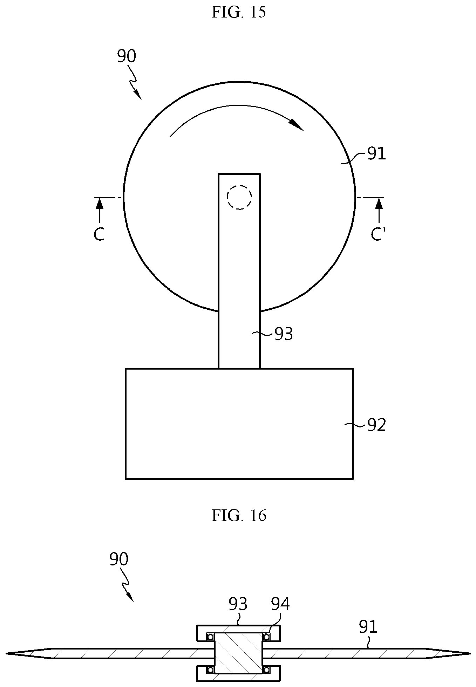

FIG. 15 is a plan view showing an example of the horizontal cutter 90 according to another embodiment of the present disclosure, and FIG. 16 is a cross-sectional view taken along line C-C' of FIG. 15.

Referring to FIGS. 15 and 16, the horizontal cutter 90 includes a disk-shaped rotary knife 91 and a cutter body 92. The rotary knife 91 is installed to the rotation mechanism 93 so as to be rotatable in one direction. The rotary shaft of the rotary knife 91 may be coupled to the bearing 94 of the rotation mechanism 93. The rotation mechanism 93 may be coupled to a motor (not shown) to rotate the cutter knife 91.

The radius of the rotary knife 91 may be substantially the same as the radius of the virtual circle R shown in FIG. 6d. Referring to FIG. 6d, the rotary knife 91 may form a first cut surface 51 perpendicularly meeting the second cut surface 52 having a rounded surface shape.

The horizontal cutter 80, 90 may be coupled to the horn 73 as the cutter 74 of the ultrasonic cutting device 70. The method of coupling the horizontal cutter 80, 90 to the horn 73 is substantially the same as the method of coupling the vertical cutter 60 to the horn 73.

The horizontal cutter 80, 90 may approach the winding turn regions 48, 49 formed by the uncoated portion on a plane perpendicular to the axial direction Y of the electrode assembly 50 and cut the winding turn regions 48, 49 according to the shape of the cutter knife. The rotary knife 91 of the horizontal cutter 90 may be rotated at high speed to cut the winding turn regions 48, 49. Preferably, when the horizontal cutter 80, 90 is used as the cutter 74 of the ultrasonic cutting device 70, the winding turn regions 48, 49 may be cut by the cutter knife 81, 91 which are ultrasonically vibrating.

Hereinafter, the process of cutting the winding turn regions 48, 49 by the vertical cutter 60 (FIG. 7) and the horizontal cutter 80 (FIG. 13) will be described in detail.

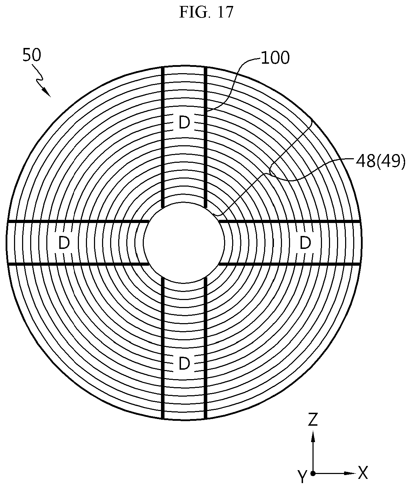

FIG. 17 is a diagram showing a state after forming a cutting line 100 in winding turn regions 48, 49 of the electrode assembly 50 by using the vertical cutter 60 according to an embodiment of the present disclosure.

Referring to FIG. 17, while the vertical cutter 60 is ultrasonically vibrating, the cutter knife 61 is placed to face the upper surface of the electrode assembly 50, and the vertical cutter 60 is moved along the axial direction Y to cut the upper portions of the winding turn regions 48, 49 to a predetermined depth, thereby forming a cutting line 100 at the edge of the bending target area D.

The bending target area D corresponds to a region where the uncoated portion flags are bent along the radial direction of the electrode assembly 50 for welding with the current collecting plate. The cutting line 100 corresponds to a region in which the upper portions of the winding turn regions 48, 49 are cut in a line slit shape.

Preferably, the cutting depth may be 2 mm to 10 mm. The lowermost point where the vertical cutting using the vertical cutter 60 ends may be a position higher than the end of the insulating coating layer 47 exposed to the outside of the separator 45 (point indicated by the arrow) as shown in FIG. 6a in consideration of the cutting tolerance.

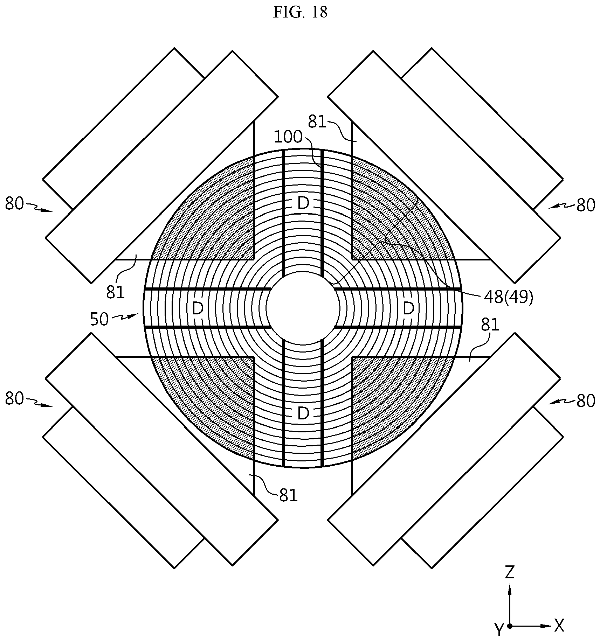

FIG. 18 is a diagram showing a process of cutting the winding turn regions 48, 49 in a plane (XZ plane) perpendicular to the axial direction Y of the electrode assembly 50 by using the horizontal cutter 80 according to an embodiment of the present disclosure.

Referring to FIG. 18, after forming the cutting line 100 at the edge of the bending target area D, while ultrasonically vibrating the horizontal cutter 80, the cutter knife 81 is moved toward the core of the electrode assembly 50 on a plane (XZ) perpendicular to the axial direction Y of the electrode assembly 50 to cut the winding turn region that exists between bending target areas D adjacent in the circumferential direction.

Preferably, the position at which the horizontal cutting is performed may be the lowest point at which the vertical cutting ends (a point indicated by an arrow in FIG. 6a) or an upper point thereof. As the horizontal cutter 80 moves toward the center of the core C of the electrode assembly 50, the region (hatched region) overlapping with the cutter knife 81 is cut, and when the cutter knife 81 moves to the edge of the bending target area D, the winding turn regions 48, 49 around the bending target area D are all cut and removed. As a result, the bending target area D remains in a protruding state to the upper portion of the first cut surface 51 along the axial direction Y of the electrode assembly 50.

Preferably, when viewed in the axial direction Y of the electrode assembly 50, the bending target area D may extend radially along the radial direction and be disposed at the same angle along the circumferential direction.

Preferably, the bending target area D may have a cross shape extending outward from the core center of the electrode assembly 50, when viewed in the axial direction Y of the electrode assembly 50.

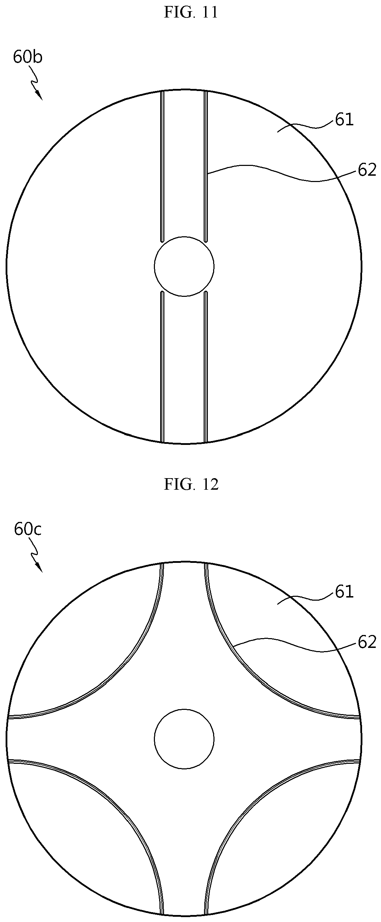

Next, the process of cutting the winding turn regions 48, 49 respectively provided on the upper and lower portions of the electrode assembly 50 by the vertical cutter 60c (FIG. 12) and the horizontal cutter 90 (FIG. 15) will be described in detail.

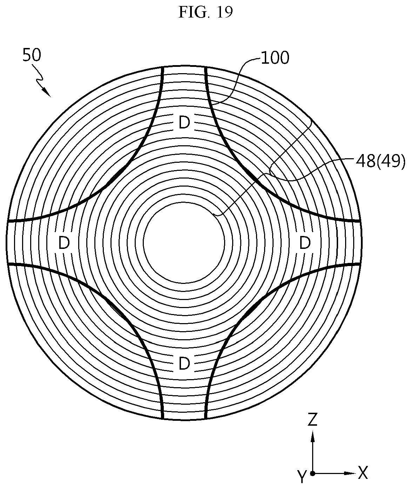

FIG. 19 is a diagram showing a state after forming the cutting line 100 in the winding turn regions 48, 49 of the electrode assembly 50 by using the vertical cutter 60c according to an embodiment of the present disclosure.

Referring to FIG. 19, while ultrasonically vibrating the vertical cutter 60c, the cutter knife 61 is placed to face the upper surface of the electrode assembly 50, and the vertical cutter 60c is moved along the axial direction Y to cut the winding turn regions 48, 49 to a predetermined depth, thereby forming a cutting line 100 at the edge of the bending target area D. The cutting line 100 has an arc shape curved toward the core center of the electrode assembly 50. The arc corresponds to the arc of a circle with an eccentricity of 1. The bending target area D has a cross shape, but its edge has an arc shape.

The bending target area D corresponds to a region where the uncoated portion flags are bent along the radial direction of the electrode assembly 50 for welding with the current collecting plate. The cutting line 100 corresponds to a region where the winding turn regions 48, 49 are removed along the axial direction Y of the electrode assembly 50. Preferably, the cutting depth may be 2 mm to 10 mm.

As shown in FIG. 6a, it is preferable that the lowermost point where the vertical cutting using the vertical cutter 60c ends is higher than the end of the insulating coating layer 47 exposed to the outside of the separator 45 (point indicated by the arrow) in consideration of the cutting tolerance.

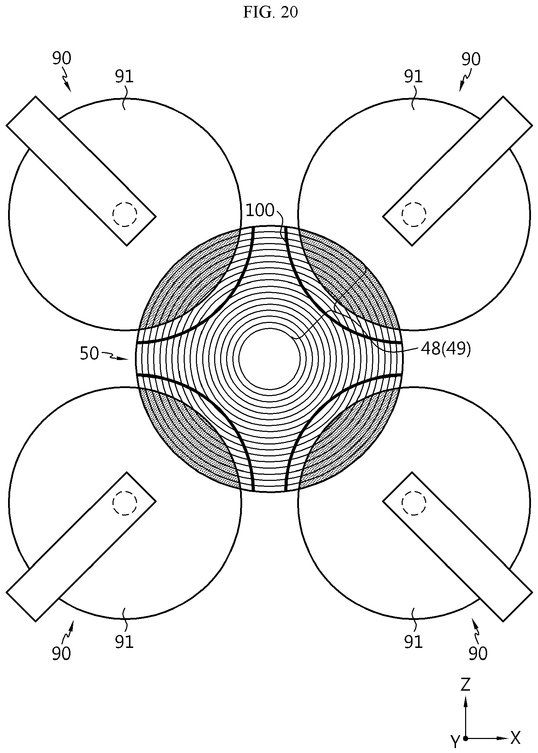

FIG. 20 is a drawing showing the process of cutting the winding turn region around the bending surface region D in a plane (XZ plane) perpendicular to the axial direction Y of the electrode assembly 50 by using the horizontal cutter 90 including a rotary knife 91 according to an embodiment of the present disclosure.

Referring to FIG. 20, after forming the arc-shaped cutting line 100 at the edge of the bending target area D, while ultrasonically vibrating the rotary knife 91 of the horizontal cutter 90, the rotary knife 91 is moved toward the core of the electrode assembly 50 on the plane (XZ) perpendicular to the axial direction Y of the electrode assembly 50 to cut the winding turn region existing outside the arc-shaped cutting line 100. In some cases, it is also possible to cut the winding turn region only by the rotation of the rotary knife 91 without applying ultrasonic vibration to the rotary knife 91 of the horizontal cutter 90.

Preferably, the position at which the horizontal cutting is performed may be the lowest point at which the vertical cutting ends (a point indicated by an arrow in FIG. 6a) or an upper point thereof. As the horizontal cutter 90 moves toward the core center of the electrode assembly 50, the region (hatched region) overlapping with the rotary knife 91 is cut, and when the rotary knife 91 moves to the edge of the bending target area D, all of the winding turn regions in a region except for the bending target area D are cut and removed. As a result, the bending target area D remains in a protruding state to the upper portion of the first cut surface 51 along the axial direction Y of the electrode assembly 50.

Preferably, the radius of curvature of the rotary knife 91 of the horizontal cutter 90 may be substantially equal to or smaller than the radius of curvature of the cutting line 100. In the latter case, the winding turn region outside the cutting line 100 may be cut by combining linear and rotational movements of the rotary knife 91.

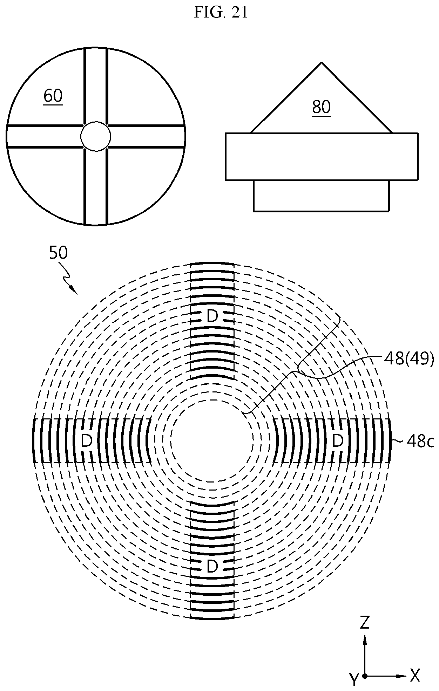

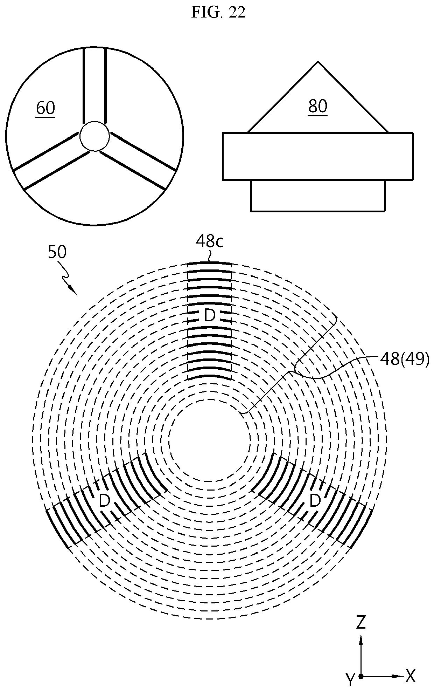

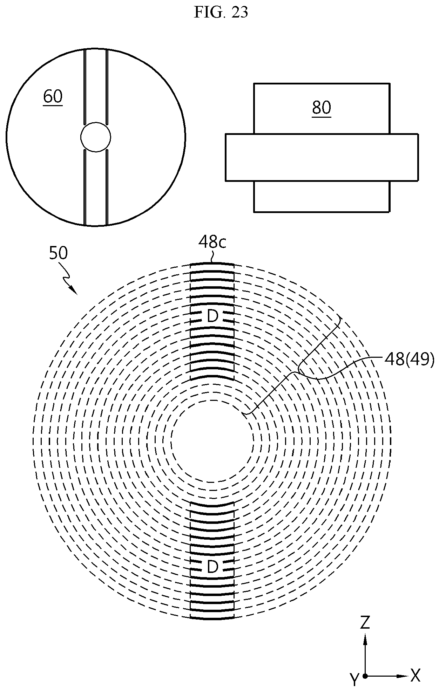

FIGS. 21 to 24 are top plan views showing an arrangement structure of the bending target area D after the winding turn regions 48, 49 are cut according to an embodiment of the present disclosure.

In the drawings, the bending target area D protrudes from the first cut surface 51 perpendicular to the axial direction Y to the upper portion of the electrode assembly 50.

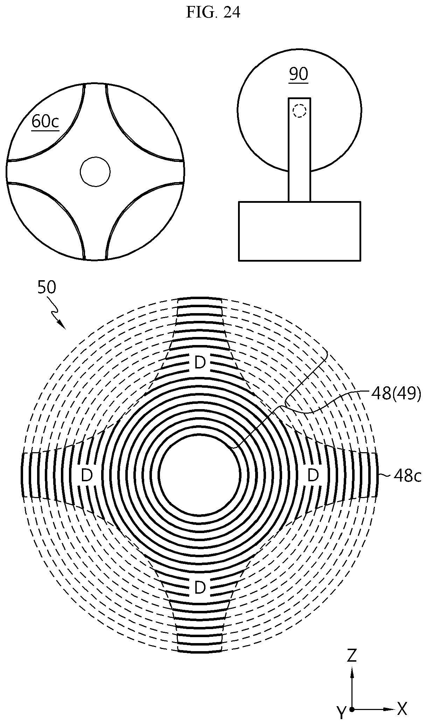

In each drawing, the structure of the cutter is shown on the cross-sectional structure of the electrode assembly 50. The bending target area D shown in FIGS. 21 to 23 may be formed by sequentially using the vertical cutter 60 and the horizontal cutter 80. In addition, the bending target area D shown in FIG. 24 may be formed by sequentially using the vertical cutter 60c and the horizontal cutter 90 having a rotary knife 91.

Preferably, as shown in FIG. 5, the uncoated portion near the core of the electrode assembly 50 has a lower height than the uncoated portion of the other region. Therefore, the bending target area D may not be formed near the core.

According to another aspect of the present disclosure, the bending target area D formed by cutting the winding turn regions 48, 49 of the electrode assembly 50 includes a plurality of uncoated portion flags 48c along the radial direction. The plurality of uncoated portion flags 48c may be bent in the radial direction of the electrode assembly 50, preferably from the outer circumference toward the core.

Preferably, by adjusting the height of the uncoated portion flag 48c in the axial direction Y in the range of 2 mm to 10 mm, when the uncoated portion flags 48c are bent along the radial direction, as shown in FIG. 6c, at least 3 sheets or more, at least 4 sheets or more, at least 5 sheets or more, at least 6 sheets or more, at least 7 sheets or more, at least 8 sheets or more, at least 9 sheets or more, or at least 10 sheets or more may be stacked in the axial direction Y of the electrode assembly 50.

The bending target area D has a shape protruding from the first cut surface 51 along the axial direction Y of the electrode assembly 50 and has a structure extending radially along the bending direction. In addition, the uncoated portion flags 48c included in the bending target area D have a narrow width in the circumferential direction. Therefore, when the uncoated portion flags 48c included in the bending target area D are bent along the radial direction of the electrode assembly 50, the bending is performed uniformly. In addition, as the uncoated portion flags 48c are stacked in multiple layers along the axial direction Y, the flatness of the bending surface region F (FIG. 6c) is improved. In addition, if the current collecting plate is welded to the bending surface region F with improved flatness, the welding strength may be sufficiently increased by increasing the welding output, and the resistance characteristics of the welding interface may be improved.

The electrode assembly 50 according to an embodiment of the present disclosure may be applied to a jelly-roll type cylindrical battery.

Preferably, the cylindrical battery may be, for example, a cylindrical battery whose form factor ratio (defined as a value obtained by dividing the diameter of the cylindrical battery by height, namely a ratio of diameter (Φ) to height (H)) is greater than about 0.4.

Here, the form factor means a value indicating the diameter and height of a cylindrical battery. The cylindrical battery according to an embodiment of the present disclosure may be, for example, a 46110 battery, a 4875 battery, a 48110 battery, a 4880 battery, or a 4680 battery. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collecting plate to the bending surface region of the uncoated portion, it is necessary to sufficiently increase the number of overlapping layers of the uncoated portion in order to sufficiently secure the welding strength and lower the resistance. This requirement may be achieved by the electrode and the electrode assembly according to the embodiments (modifications) of the present disclosure.

A battery according to an embodiment of the present disclosure may be an approximately cylindrical battery, whose diameter is approximately 46 mm, height is approximately 110 mm, and form factor ratio is 0.418.

A battery according to another embodiment may be an approximately cylindrical battery, whose diameter is about 48 mm, height is about 75 mm, and form factor ratio is 0.640.

A battery according to still another embodiment may be an approximately cylindrical battery, whose diameter is approximately 48 mm, height is approximately 110 mm, and form factor ratio is 0.436.

A battery according to still another embodiment may be an approximately cylindrical battery, whose diameter is approximately 48 mm, height is approximately 80 mm, and form factor ratio is 0.600.

A battery according to still another embodiment may be an approximately cylindrical battery, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

Hereinafter, the cylindrical battery according to an embodiment of the present disclosure will be described in detail.

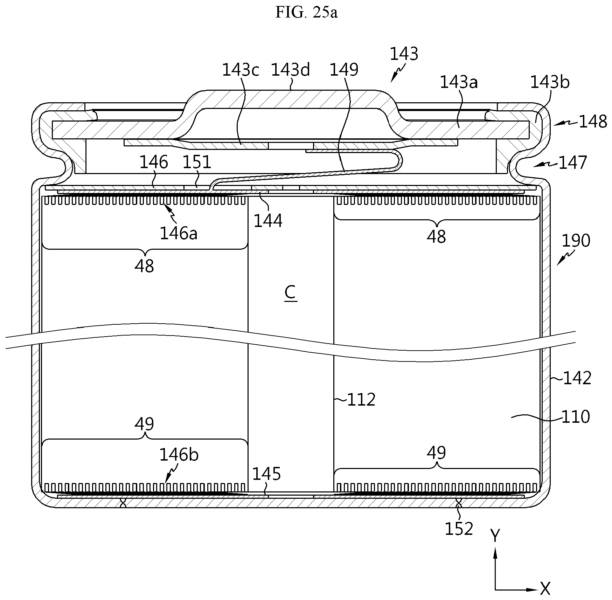

FIG. 25a is a cross-sectional view showing a cylindrical battery 190 according to an embodiment of the present disclosure, taken along the axial direction Y.

Referring to FIG. 25a, the cylindrical battery 190 according to an embodiment of the present disclosure includes an electrode assembly 110 having a positive electrode, a separator and a negative electrode wound in a jelly-roll form, a battery housing 142 for accommodating the electrode assembly 110, and a sealing body 143 for sealing an open end of the battery housing 142. The electrode assembly 110 has a structure of the above embodiment.

The battery housing 142 is a cylindrical container with an opening at the top. The battery housing 142 is made of a conductive metal material such as aluminum, steel, stainless steel, or the like. The battery housing 142 accommodates the electrode assembly 110 in the inner space through the top opening and also accommodates the electrolyte. A Ni coating layer may be formed on the outer surface and/or inner surface of the battery housing 142.

The electrolyte may be a salt having a structure like A⁺B⁻. Here, A⁺ includes an alkali metal cation such as Li⁺, Na⁺, or K⁺, or a combination thereof. and B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The electrode assembly 110 may have a jelly-roll shape. The electrode assembly 110 may be manufactured by winding an electrode-separator stack formed by sequentially stacking a lower separator, a positive electrode, an upper separator, and a negative electrode at least once, based on the winding center C, as shown in FIG. 2.

An uncoated portion 146a of the positive electrode and an uncoated portion 146b of the negative electrode protrude on the upper and lower portions of the electrode assembly 110, respectively. The uncoated portion 146a of the positive electrode forms a winding turn region 48 at the upper portion of the electrode assembly 110, and the uncoated portion 146b of the negative electrode forms a winding turn region 49 at the lower portion of the electrode assembly 110. The winding turn regions 48, 49 include a bent portion and a cut portion alternately disposed along the circumferential direction. Examples of the bent portion and the cut portion are described above with reference to FIGS. 6b and 6d.

The sealing body 143 may include a cap 143a, a sealing gasket 143b for providing airtightness between the cap 143a and the battery housing 142 and having insulation property, and a connection plate 143c electrically and mechanically coupled to the cap 143a.

The cap 143a is a component made of a conductive metal material, and covers the top opening of the battery housing 142. The cap 143a is electrically connected to the bent portion 48b of the positive electrode winding turn region 48, and is electrically insulated from the battery housing 142 by means of the sealing gasket 143b. Accordingly, the cap 143a may function as a positive electrode terminal of the cylindrical battery 190.

The cap 143a is placed on the beading portion 147 formed on the battery housing 142, and is fixed by a crimping portion 148. Between the cap 143a and the crimping portion 148, the sealing gasket 143b may be interposed to secure the airtightness of the battery housing 142 and the electrical insulation between the battery housing 142 and the cap 143a. The cap 143a may have a protrusion 143d protruding upward from the center thereof.

The battery housing 142 is electrically connected to the bent portion of the negative electrode winding turn region 49. Therefore, the battery housing 142 has the same polarity as the negative electrode.

The battery housing 142 includes the beading portion 147 and the crimping portion 148 at the top thereof. The beading portion 147 is formed by press-fitting the periphery of the outer circumferential surface of the battery housing 142. The beading portion 147 prevents the electrode assembly 110 accommodated inside the battery housing 142 from escaping through the top opening of the battery housing 142, and may function as a support portion on which the sealing body 143 is placed.

The crimping portion 148 is formed on the beading portion 147. The crimping portion 148 has an extended and bent shape to cover the outer circumference of the cap 143a disposed on the beading portion 147 and a part of the upper surface of the cap 143a.

The cylindrical battery 190 may further include a first current collecting plate 144 and/or a second current collecting plate 145 and/or an insulator 146.

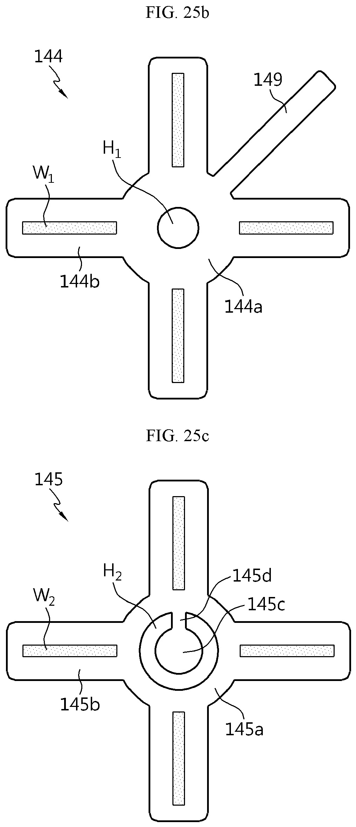

FIGS. 25b and 25c are upper plan views showing the structures of the first current collecting plate 144 and the second current collecting plate 145, respectively.

Referring to FIGS. 25b and 25c, the first current collecting plate 144 is coupled to the upper portion of the electrode assembly 110. The first current collecting plate 144 is made of a conductive metal material such as aluminum, copper, nickel, or the like.

The first current collecting plate 144 is welded to the welding target area of the bending surface region F (FIG. 6c) formed by bending the uncoated portion flags included in the bent portion of the winding turn region 48 of the positive electrode.

Preferably, in the welding target area, the average number of stacked uncoated portion flags in the axial direction Y of the electrode assembly 110 may be 5 or more. In addition, in the welding target area, the uncoated portion flags may have an average stacking thickness of 50 um or more.

The first current collecting plate 144 may include a support portion 144a, a plurality of leg portions 144b extending outward from the support portion 144a, and a lead portion 149 extending outward from the support portion 144a between adjacent leg portions 144b. The lead portion 149 may also extend from any one of the leg portions 144b, unlike the drawing.

The support portion 144a is seated near the core of the electrode assembly 110, and the plurality of leg portions 144b may be welded to the welding target area of the bending surface region while seated on the bending surface region.

A hole (H₁) is provided in the center of the support portion 144a. Electrolyte may be injected through the hole (H₁). The diameter of the hole (H₁) is 0.5 times or more of the diameter of the cavity in the core of the electrode assembly 110. If the diameter of the hole (H₁) is smaller than the diameter of the cavity in the core, it is possible to prevent the electrode or the separator from coming out through the cavity of the core when a vent occurs in the cylindrical battery 190. In addition, if the diameter of the hole (H₁) is equal to or larger than the diameter of the cavity in the core, a welding jig may be easily inserted and the electrolyte may be injected smoothly during the process of welding the second current collecting plate 145 to the bottom of the battery housing 142.

The lead portion 149 may extend upward from the electrode assembly 110 and be coupled to the connection plate 143c or directly coupled to the lower surface of the cap 143a. The connection plate 143c may be coupled to the lower surface of the cap 143a. The lead portion 149 and other components may be coupled through welding.

The bending surface region formed by bending the uncoated portion flags and the first current collecting plate 144 may be coupled by laser welding. Laser welding may be replaced with resistance welding, ultrasonic welding, or the like.

Referring to FIGS. 25a and 25c, a plate-shaped second current collecting plate 145 may be coupled to the lower surface of the electrode assembly 110.

The second current collecting plate 145 includes a support portion 145a in which a hole (H₂) is formed, a plurality of leg portions 145b extending outward from the support portion 145a, a connection portion 145c provided inside the hole (H₂) and coupled to the bottom of the battery housing 142, and a bridge portion 145d for connecting the connection portion 145c and the support portion 145a.

The second current collecting plate 145 is made of a conductive metal material such as aluminum, copper, nickel, or the like. The support portion 145a is seated near the core on the lower surface of the electrode assembly 110. The plurality of leg portions 145b are welded to the welding target area of the bending surface region formed by bending the uncoated portion flags of the winding turn region 49 of the negative electrode. The connection portion 145c may be welded on the bottom surface of the inner side of the battery housing 142.

The diameter of the connection portion 145c is greater than the diameter of the cavity in the core of the electrode assembly 110. The bridge portion 145d connects the inner surface of the hole (H₂) and the outer surface of the connection portion 145c. The bridge portion 145d acts to buffer vibration or stress when vibration or stress is applied to the second current collecting plate 145. The width or thickness of the bridge portion 145d may be partially reduced. Then, when an overcurrent flows through the bridge portion 145d, the bridge portion 145d may be melted and disconnected to block the overcurrent.

Preferably, in the welding target area, the average number of stacked uncoated portion flags in the axial direction Y of the electrode assembly 110 may be 5 or more. In addition, in the welding target area, the uncoated portion flags may have an average stacking thickness of 50 um or more.

Referring to FIGS. 25b and 25c, the welding pattern (W₁) formed on the leg portion 144b of the first current collecting plate 144 and the welding pattern (W₂) formed on the leg portion 145b of the second current collecting plate 145 may extend in the radial direction from points spaced apart from the core center of the electrode assembly 110 by substantially the same distance. The radial length of the welding pattern (W₁) may be the same as or different from the radial length of welding pattern (W₂). The welding patterns (W₁, W₂) may be a continuous array of weld beads or a discontinuous array of weld beads.

Referring to FIG. 25a, the insulator 146 may cover the first current collecting plate 144. The insulator 146 may cover the first current collecting plate 144 at the upper surface of the first current collecting plate 144, thereby preventing direct contact between the first current collecting plate 144 and the inner circumference of the battery housing 142.

The insulator 146 has a lead hole 151 so that the lead portion 149 extending upward from the first current collecting plate 144 may be withdrawn therethrough. The lead portion 149 is drawn upward through the lead hole 151 and coupled to the lower surface of the connection plate 143c or the lower surface of the cap 143a.

A peripheral region of the edge of the insulator 146 may be interposed between the first current collecting plate 144 and the beading portion 147 to fix the coupled body of the electrode assembly 110 and the first current collecting plate 144. Accordingly, the movement of the coupled body of the electrode assembly 110 and the first current collecting plate 144 may be restricted in the axial direction Y, thereby improving the assembly stability of the cylindrical battery 190.

The insulator 146 may be made of an insulating polymer resin. In one example, the insulator 146 may be made of polyethylene, polypropylene, polyimide, or polybutylene terephthalate.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area. Accordingly, when an abnormality occurs in the cylindrical battery 190 and the internal pressure increases to a predetermined level or more, the venting portion 152 may be ruptured so that the gas generated inside the battery housing 142 is discharged to the outside.

The venting portion 152 may be formed continuously or discontinuously while drawing a circle at the lower surface of the battery housing 142. In one modification, the venting portion 152 may be formed in a straight pattern or other patterns.

Since the diameter of the connection portion 145c of the second current collecting plate 145 is larger than the diameter of the cavity in the core of the electrode assembly 110, when the venting portion 152 ruptures and the gas generated inside the battery housing 142 is discharged to the outside, it is possible to prevent the electrode or the separator from coming out.

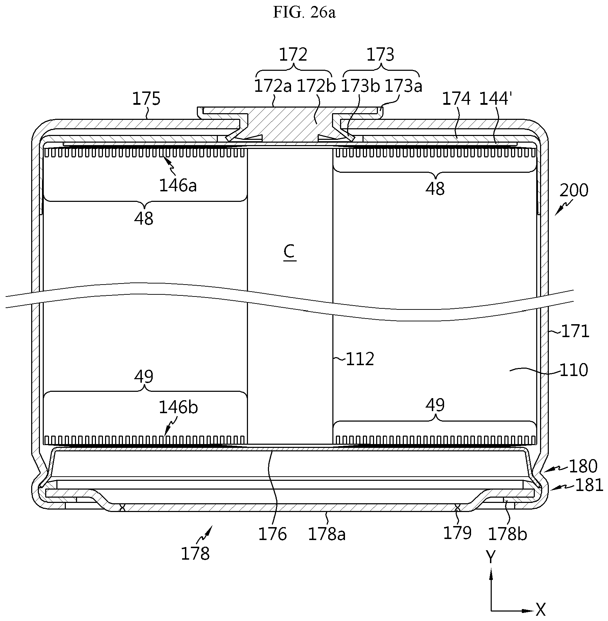

FIG. 26a is a cross-sectional view showing a cylindrical battery 200 according to another embodiment of the present disclosure, taken along the axial direction Y.

Referring to FIG. 26a, the structure of the electrode assembly of the cylindrical battery 200 is substantially the same as that of the cylindrical battery 190 of in FIG. 25a, and the other structure except for the electrode assembly is changed.

Specifically, the cylindrical battery 200 includes a battery housing 171 through which a terminal 172 is installed. The terminal 172 may be a rivet terminal whose one end edge is riveted to the inner surface of the closed portion of the battery housing 171. The terminal 172 is installed on the closed surface (the upper portion in the drawing) of the battery housing 171. The terminal 172 is riveted to the perforation hole of the battery housing 171 in a state where an insulating gasket 173 is interposed therebetween. The terminal 172 is exposed to the outside in a direction opposite to the direction of gravity.

The terminal 172 includes a terminal exposing portion 172a and a terminal insert portion 172b. The terminal exposing portion 172a is exposed to the outside of the closed portion of the battery housing 171. The terminal exposing portion 172a may be located approximately at a central portion of the closed portion of the battery housing 171. The maximum diameter of the terminal exposing portion 172a may be larger than the maximum diameter of the perforation hole formed in the battery housing 171. The terminal insert portion 172b may be electrically connected to the bent portion of the positive electrode winding turn region 48 through approximately the central portion of the closed portion of the battery housing 171. The electrically connected portion is a bending surface region formed by bending uncoated portion flags of the positive electrode winding turn region 48. The terminal insert portion 172b may be riveted onto the inner surface of the closed portion of the battery housing 171. That is, the edge of the end of the terminal insert portion 172b may be pressed by a caulking jig to have a shape curved toward the inner surface of the battery housing 171. The maximum diameter of the end of the terminal insert portion 172b may be larger than the maximum diameter of the perforation hole of the battery housing 171.

The lower surface of the terminal insert portion 172b is substantially flat and may be welded to the first current collecting plate 144' connected to the bent portion of the positive electrode winding turn region 48.

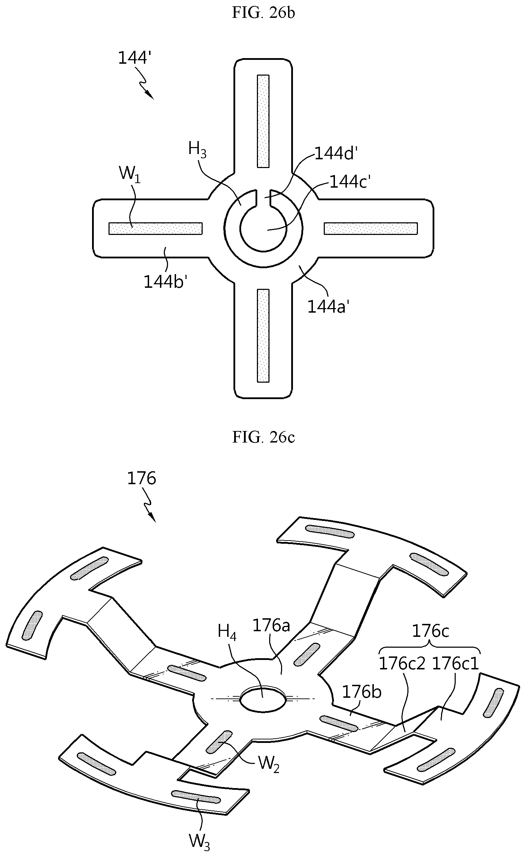

FIG. 26b is an upper plan view showing the structure of the first current collecting plate 144'. Referring to FIG. 26b, the first current collecting plate 144' has substantially the same structure as the current collecting plate 145 shown in FIG. 25c. That is, the first current collecting plate 144' includes a support portion 144a' having a hole (H₃), a plurality of leg portions 144b' extending along the radial direction from the support portion 144', a connection portion 144c' provided inside the hole (H₃), and a bridge portion 144d' for connecting the support portion 144a' and the connection portion 144c'. The connection portion 144c' of the first current collecting plate 144' may be welded to the flat lower end of the terminal insert portion 172b of the terminal 172. The plurality of leg portion 144b' may be welded to the welding target area defined in the bending surface region of the winding turn region 48 of the positive electrode.

Referring to FIG. 26a, an insulator 174 made of an insulating material may be interposed between the first current collecting plate 144' and the inner surface of the battery housing 171. The insulator 174 covers the upper portion of the first current collecting plate 144' and the top edge of the electrode assembly 110. Accordingly, it is possible to prevent the first current collecting plate 144' from contacting the inner surface of the battery housing 171 having a different polarity to cause a short circuit. Preferably, the terminal insert portion 172b of the terminal 172 may be welded to the first current collecting plate 144' through the insulator 174. The insulator 174 is made of a polymer resin with insulation.

The insulating gasket 173 is interposed between the battery housing 171 and the terminal 172 to prevent the battery housing 171 and the terminal 172 having opposite polarities from electrically contacting each other. Accordingly, the upper surface of the battery housing 171 having an approximately flat shape may function as a negative electrode terminal of the cylindrical battery 200.

The insulating gasket 173 includes a gasket exposing portion 173a and a gasket insert portion 173b. The gasket exposing portion 173a is interposed between the terminal exposing portion 172a of the terminal 172 and the battery housing 171. The gasket insert portion 173b is interposed between the terminal insert portion 172b of the terminal 172 and the battery housing 171. The gasket insert portion 173b may be deformed together when the terminal insert portion 172b is riveted, so as to be in close contact with the inner surface of the battery housing 171. The insulating gasket 173 may be made of, for example, a polymer resin having insulation property.

The gasket exposing portion 173a of the insulating gasket 173 may have an extended shape to cover the outer circumference of the terminal exposing portion 172a of the terminal 172. When the insulating gasket 173 covers the outer circumference of the terminal 172, it is possible to prevent a short circuit from occurring while an electrical connection part such as a bus bar is coupled to the upper surface of the battery housing 171 and/or the terminal 172. Although not shown in the drawings, the gasket exposing portion 173a may have an extended shape to cover not only the outer circumference surface of the terminal exposing portion 172a but also a part of the upper surface thereof.

When the insulating gasket 173 is made of a polymer resin, the insulating gasket 173 may be coupled to the battery housing 171 and the terminal 172 by thermal fusion. In this case, airtightness at the coupling interface between the insulating gasket 173 and the terminal 172 and at the coupling interface between the insulating gasket 173 and the battery housing 171 may be enhanced. Meanwhile, when the gasket exposing portion 173a of the insulating gasket 173 has a shape extending to the upper surface of the terminal exposing portion 172a, the terminal 172 may be integrally coupled with the insulating gasket 173 by insert injection molding.

In the upper surface of the battery housing 171, a remaining area 175 other than the area occupied by the terminal 172 and the insulating gasket 173 corresponds to an electrode terminal having a polarity opposite to that of the terminal 172.

FIG. 26c is a perspective view showing the structure of the second current collecting plate 176. Referring to FIGS. 26a and 26c, the second current collecting plate 176 is coupled to the lower portion of the electrode assembly 110. The second current collecting plate 176 is made of a conductive metal material such as aluminum, steel, copper, nickel, or the like. The second current collecting plate 176 may be coupled to the welding target area of the bending surface region formed in the winding turn region 49 of the negative electrode through welding.

The second current collecting plate 176 includes a support portion 176a, and a plurality of leg portions 176b extending along the radial direction from the support portion 176a and welded to the welding target area. The support portion 176a has a hole (H₄) in the center. Electrolyte may be injected through the hole (H₄). The diameter of the hole (H₄) is 0.5 times or more of the diameter of the cavity in the core of the electrode assembly 110. The function of the hole (H₄) is substantially the same as that of hole (H₁) described above.

Preferably, at least a part of the second current collecting plate 176 may be electrically connected to the battery housing 171. In one example, at least a part of the edge portion of the second current collecting plate 176 may be interposed and fixed between the inner surface of the battery housing 171 and the sealing gasket 178b. To this end, the second current collecting plate 176 includes a housing connection portion 176c. The housing connection portion 176c includes a connection portion 176c2 extending obliquely toward the lower surface of the beading portion 180 from an end of the leg portion 176b and a contact portion 176c1 disposed on the lower surface of the beading portion 180. The connection portion 176c2 may extend from the support portion 176a between the leg portions 176b, unlike the drawing. The contact portion 176c1 may extend in an arc shape along the circumferential direction of the beading portion 180 to increase a contact area with the beading portion 180.

At least a part of the edge of the second current collecting plate 176, for example the contact portion 176c1, may be fixed to the beading portion 180 by welding while being supported on the bottom surface of the beading portion 180 formed at the lower end of the battery housing 171. In a modified example, at least a part of the edge of the second current collecting plate 176 may be directly welded to the inner wall surface of the battery housing 171.

Preferably, the second current collecting plate 176 and the welding target area included in the bending surface region of the winding turn region 49 of the negative electrode may be coupled by laser welding. At this time, in the bending surface region, welding is performed in an area where the average number of stacked uncoated portion flags is 5 or more in the axial direction Y or in an area where the average stacked thickness of uncoated portion flags is 25 um or more. Laser welding may be replaced by resistance welding, ultrasonic welding, spot welding, or the like.

Meanwhile, the welding pattern (W₁) formed on the leg portion 144b' of the first current collecting plate 144' and the welding pattern (W₂) formed on the leg portion 176b of the second current collecting plate 176 may extend in the radial direction from points spaced apart from the core center of the electrode assembly 110 by substantially the same distance. The radial length of the welding pattern (W₁) may be the same as or different from the radial length of the welding pattern (W₂). In one example, the radial length of the welding pattern (W₁) is longer than the radial length of the welding pattern (W₂). This is because the second current collecting plate 176 includes the connection portion 176c2 and thus the leg portion 176b of the second current collecting plate 176 is shorter than the leg portion 144b' of the first current collecting plate 144'. At least one welding pattern (W₃) is also formed on the contact portion 176c1 of the second current collecting plate 176. The welding pattern (W₃) may have a straight line or arc shape. The welding patterns (W₁, W₂, W₃) may be a continuous array of weld beads or a discontinuous array of weld beads.

A sealing body 178 for sealing the lower open end of the battery housing 171 includes a cap 178a and a sealing gasket 178b. The sealing gasket 178b electrically separates the cap 178a and the battery housing 171. A crimping portion 181 fixes the edge of the cap 178a and the sealing gasket 178b together. The cap 178a has a venting portion 179. The configuration of the venting portion 179 is substantially the same as the above embodiment.

Preferably, the cap 178a is made of a conductive metal material. However, since the sealing gasket 178b is interposed between the cap 178a and the battery housing 171, the cap 178a may not have electrical polarity. The sealing body 178 sea

ls the open end of the lower portion of the battery housing 171 and functions to discharge gas when the internal pressure of the battery 200 increases over a critical value. The cap 178a may include a venting portion 179 in an edge region of the flat portion. The configuration of the venting portion 179 is substantially the same as that of the former embodiment.

Preferably, the terminal 172 electrically connected to the bent portion of the positive electrode winding turn region 48 through the first current collecting plate 144' is used as the first electrode terminal. In addition, in the upper surface of the battery housing 171 electrically connected to the bent portion of the negative electrode winding turn region 49 through the second current collecting plate 176, a part 175 except for the terminal 172 is used as the second electrode terminal having a different polarity from the first electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the second electrode terminal has an approximately flat shape, a sufficient joining area may be secured for joining electrical connection components such as bus bars. Accordingly, the cylindrical battery 200 may reduce the resistance at the joining portion of the electrical connection components to a desirable level.

In the present disclosure, as shown in FIG. 5, the uncoated portion constituting a winding turn near the core has a low height. Therefore, even if the uncoated portion flags of the bending target area D are bent toward the center of the core C of the electrode assembly 110, the cavity 112 of the core C may be opened upward without being blocked.

If the cavity 112 is not blocked, there is no difficulty in the electrolyte injection process, and the electrolyte injection efficiency is improved. In addition, by inserting a welding jig through the cavity 112, a welding process between the current collecting plate 145 and the bottom of the battery housing 142 or between the current collecting plate 144' and the terminal 172 may be easily performed.

The cylindrical battery according to the above embodiments (modifications) may be used to manufacture a battery pack.

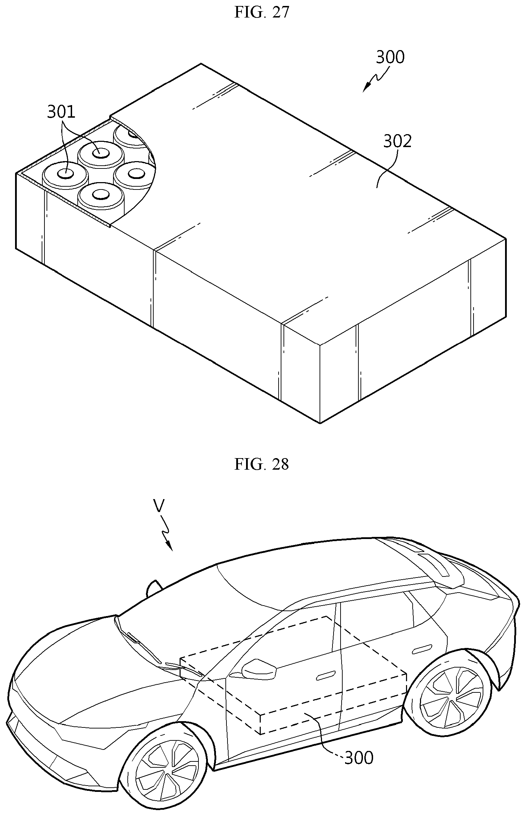

FIG. 27 is a diagram schematically showing a battery pack according to an embodiment of the present disclosure.

Referring to FIG. 27, a battery pack 300 according to an embodiment of the present disclosure includes an aggregate in which cylindrical batteries 301 are electrically connected, and a pack housing 302 for accommodating the aggregate. The cylindrical battery 301 may be any one of the batteries according to the above embodiments (modifications). In the drawing, components such as a bus bar for electrical connection of the cylindrical batteries 301, a cooling unit, and an external terminal are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 28 is a diagram schematically showing a vehicle including the battery pack 300 of FIG. 27.

Referring to FIG. 28, a vehicle V according to an embodiment of the present disclosure includes the battery pack 300 according to an embodiment of the present disclosure. The vehicle V operates by receiving power from the battery pack 300 according to an embodiment of the present disclosure.

According to one aspect of the present disclosure, since the bending target area of the uncoated portion having a protruding shape along the axial direction of the electrode assembly is formed in a pattern extending along the bending direction and the uncoated portion flags of the bending target area are bent, it is possible to improve the flatness of the bent surface of the uncoated portion and alleviate the irregular bending of the uncoated portion at the bottom of the bent surface.

According to another aspect of the present disclosure, by cutting a significant portion of the winding turn region of the uncoated portion in the peripheral area of the bending target area at the axial end of the electrode assembly to provide a passage through which the electrolyte can quickly penetrate into the active material layer, it is possible to improve the electrolyte impregnation.

According to another aspect of the present disclosure, since the axial height of the electrode assembly may be reduced by cutting and bending the winding turn region of the uncoated portion, the energy density of the cylindrical battery may be increased accordingly.

According to another aspect of the present disclosure, since the plurality of uncoated portion flags formed in the bending target area in the process of cutting the winding turn region of the uncoated portion are bent along the radial direction of the electrode assembly to form a bending surface region in which the uncoated portion flags overlap in several layers and then the current collecting plate is welded to the corresponding area, it is possible to lower the resistance of the cylindrical battery.

According to still another aspect of the present disclosure, by providing an ultrasonic cutting device including a vertical cutter and a horizontal cutter, the winding turn region of the uncoated portion may be easily cut so that the bending target area remains protruded in the axial direction of the electrode assembly.

According to still another aspect of the present disclosure, by providing a method for easily cutting the winding turn region of the uncoated portion so that the bending target area remains protruded in the axial direction of the electrode assembly, it is possible to improve productivity and save manufacturing cost of the electrode assembly.

According to still another aspect of the present disclosure, by providing a large-capacity battery pack manufactured using cylindrical batteries having high energy density and low resistance and a vehicle including the same, it is possible to improve the safety of rapid charging and the efficiency of energy use.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrode assembly comprising a positive electrode, a negative electrode, and a separator interposed therebetween that are wound around one axis to define a core and an outer circumference of the electrode assembly,
wherein at least one of the positive electrode and the negative electrode includes an uncoated portion provided at a long side end and exposed beyond the separator along an axial direction of the electrode assembly,
wherein a winding turn region of the uncoated portion is provided at one end of the electrode assembly,
wherein the winding turn region includes a cut portion and a bent portion alternately disposed along a circumferential direction of the electrode assembly,
wherein an axial height of the cut portion is smaller than an axial height of the bent portion,
wherein the bent portion includes a plurality of uncoated portion flags arranged along a radial direction of the electrode assembly, and
wherein the plurality of uncoated portion flags overlap along the axial direction to define a bending surface region along the radial direction of the electrode assembly.

2. The electrode assembly according to claim 1,
wherein the cut portion includes a first cut surface substantially perpendicular to the axial direction.

3. The electrode assembly according to claim 2,
wherein the first cut surface is an ultrasonic cut surface.

4. The electrode assembly according to claim 2,
wherein an insulating coating layer is provided at a proximal end of the uncoated portion flag,
wherein an axial end of the insulating coating layer extends and is exposed beyond an axial end of the separator, and
wherein the first cut surface is spaced apart from the axial end of the insulating coating layer.

5. The electrode assembly according to claim 4,
wherein when viewed in the axial direction, the axial end of the insulating coating layer and an axial end of an active material layer included in the positive electrode or the negative electrode are exposed through the first cut surface.

6. The electrode assembly according to claim 2,
wherein the plurality of uncoated portion flags protrude from the first cut surface along the axial direction.

7. The electrode assembly according to claim 6,
wherein the plurality of uncoated portion flags are bent toward the core of the electrode assembly along a bending line spaced apart from the first cut surface to form a bending surface region.

8. The electrode assembly according to claim 7,
wherein a bending length of the uncoated portion flag closest to the core of the electrode assembly is less than or equal to a distance from the position of the corresponding uncoated portion flag to the core.

9. The electrode assembly according to claim 7,
wherein the first cut surface is spaced apart from the bending surface region.

10. The electrode assembly according to claim 2,
wherein the bent portion includes a second cut surface extending along a side of the plurality of uncoated portion flags.

11. The electrode assembly according to claim 10,
wherein the second cut surface is an ultrasonic cut surface.

12. The electrode assembly according to claim 10,
wherein the second cut surface is parallel to the axial direction.

13. The electrode assembly according to claim 10,
wherein the first cut surface and the second cut surface intersect perpendicularly to each other.

14. The electrode assembly according to claim 10,
wherein the second cut surface is a flat surface.

15. The electrode assembly according to claim 10,
wherein the second cut surface is a rounded surface.

16. The electrode assembly according to claim 15,
wherein an eccentricity of an arc where the rounded surface meets a virtual plane perpendicular to the axial direction is substantially 1.

17. The electrode assembly according to claim 16,
wherein a center of a virtual circle containing the arc and a core center of the electrode assembly are opposite to each other based on the arc.

18. The electrode assembly according to claim 16,
wherein the arc is substantially symmetrical based on a straight line connecting a center of a virtual circle containing the arc and a core center of the electrode assembly.

19. The electrode assembly according to claim 1,
wherein the plurality of uncoated portion flags have substantially a same width in the circumferential direction from the core of the electrode assembly toward the outer circumference.

20. The electrode assembly according to claim 1,
wherein widths of the plurality of uncoated portion flags in the circumferential direction gradually increase or decrease from the core of the electrode assembly toward the outer circumference.

21. The electrode assembly according to claim 1,
wherein the cut portion includes first to n^{th} cut portions, and
wherein the first to n^{th} cut portions extend radially based on a core center of the electrode assembly.

22. The electrode assembly according to claim 21,
wherein the first to n^{th} cut portions are arranged rotationally symmetrically based on the core center of the electrode assembly.

23. The electrode assembly according to claim 1,
wherein the bent portion includes first to n^{th} bent portions, and
wherein the first to n^{th} bent portions extend radially based on a core center of the electrode assembly.

24. The electrode assembly according to claim 23,
wherein the first to n^{th} bent portions are arranged rotationally symmetrically based on the core center of the electrode assembly.

25. The electrode assembly according to claim 1,
wherein the bending surface region includes a region in which three or more uncoated portion flags of the plurality of uncoated portions overlap along the axial direction.

26. A method for manufacturing an electrode assembly, comprising:
(a) preparing a positive electrode and a negative electrode having a sheet shape and having an uncoated portion at a long side end;
(b) forming an electrode-separator stack by stacking the positive electrode, the negative electrode and a separator at least once with the separator being interposed between the positive electrode and the negative electrode so that the positive electrode uncoated portion and the negative electrode uncoated portion are exposed opposite to each other along a short side direction of the separator;
(c) winding the electrode-separator stack around one axis to form an electrode assembly so that a winding turn region of the positive electrode uncoated portion and a winding turn region of the negative electrode uncoated portion are exposed in opposite directions along an axial direction the electrode assembly;
(d) cutting at least one of the winding turn region of the positive electrode uncoated portion and the winding turn region of the negative electrode uncoated portion, such that at least one bending target area remains in a protruding shape along the axial direction, thereby to form a plurality of uncoated portion flags in the bending target area; and
(e) forming a bending surface region by bending the plurality of uncoated portion flags included in the bending target area along a radial direction of the electrode assembly.

27. The method for manufacturing an electrode assembly according to claim 26,
wherein the step (d) includes:
a first cutting step of cutting an edge of the bending target area along the axial direction of the electrode assembly; and
a second cutting step of cutting a region around the bending target area in a direction perpendicular to the axial direction so that the bending target area remains in the protruding shape along the axial direction.

28. The method for manufacturing an electrode assembly according to claim 27
wherein in the first cutting step, the edge of the bending target area is cut using a vertical cutter that vibrates ultrasonically in the axial direction of the electrode assembly.

29. The method for manufacturing an electrode assembly according to claim 28,
wherein a plurality of cutting lines are provided at edges of the bending target area, and
when viewed in the axial direction of the electrode assembly, the plurality of cutting lines are paired by two and radially extended based on a core center of the electrode assembly.

30. The method for manufacturing an electrode assembly according to claim 28,
wherein a plurality of cutting lines are provided at edges of the bending target area, and
wherein, when viewed in the axial direction of the electrode assembly, each of the plurality of cutting lines has an arc shape curved toward a core center of the electrode assembly.

31. The method for manufacturing an electrode assembly according to claim 27,
wherein in the second cutting step, the region around the bending target area is cut perpendicular to the axial direction using a horizontal cutter that vibrates ultrasonically perpendicular to the axial direction of the electrode assembly, so that the bending target area remains in the protruding shape along the axial direction.

32. The method for manufacturing an electrode assembly according to claim 27,
wherein in the second cutting step, the region around the bending target area is cut perpendicular to the axial direction using a horizontal cutter that rotates in a plane perpendicular to the axial direction of the electrode assembly, so that the bending target area remains in the protruding shape along the axial direction.

33. The method for manufacturing an electrode assembly according to claim 27,
wherein in the second cutting step, the region around the bending target area is cut perpendicular to the axial direction using a horizontal cutter that rotates in a plane perpendicular to the axial direction of the electrode assembly and vibrates ultrasonically along the plane, so that the bending target area remains in the protruding shape along the axial direction.

34. The method for manufacturing an electrode assembly according to claim 26,
wherein in the step (e), the plurality of uncoated portion flags are bent so that a region in which three or more uncoated portion flags of the plurality of uncoated flags overlap along the axial direction is included in the bending surface region.

35. An ultrasonic cutting device, which cuts and processes a winding turn region of an uncoated portion exposed at one end of an electrode assembly in which a positive electrode and a negative electrode having an uncoated portion at a long side end, and a separator interposed therebetween are wound around one axis, the ultrasonic cutting device comprising:
a vertical cutter configured to ultrasonically cut edges of a plurality of bending target areas, which are disposed along a circumferential direction of the electrode assembly, along an axial direction of the electrode assembly to form a plurality of uncoated portion flags in the bending target areas; and
a horizontal cutter configured to ultrasonically cut a region around the plurality of bending target areas perpendicularly to the axial direction so that the plurality of uncoated portion flags protrude from an ultrasonic cut surface along the axial direction.

36. The ultrasonic cutting device according to claim 35,
wherein the vertical cutter includes:
a cutter body; and
a plurality of cutter knives coupled to the cutter body, the plurality of cutter knives being arranged to correspond to the edges of the plurality of bending target areas.

37. The ultrasonic cutting device according to claim 35,
wherein the horizontal cutter includes:
a cutter body; and
a cutter knife coupled to the cutter body, the cutter knife being coupled to the cutter body so as to be placed on a cutting plane perpendicular to the axial direction and has a shape corresponding to a winding turn region between bending adjacent target areas in the circumferential direction.

38. The ultrasonic cutting device according to claim 37,
wherein the winding turn region between the adjacent bending target areas in the circumferential direction includes a portion curved toward the core of the electrode assembly, and
wherein the cutter knife is a disk-shaped rotary knife having a radius substantially equal to the radius of curvature of the curved portion.

39. A cylindrical battery comprising:
(a) an electrode assembly in which a positive electrode, a negative electrode, and a separator interposed therebetween that are wound around one axis to define a core and an outer circumference of the electrode assembly, wherein at least one of the positive electrode and the negative electrode includes an uncoated portion exposed beyond the separator along an axial direction of the electrode assembly at a long side end, wherein a winding turn region of the uncoated portion is provided at one end of the electrode assembly, wherein the winding turn region includes a cut portion and a bent portion alternately disposed along a circumferential direction of the electrode assembly, wherein an axial height of the cut portion is smaller than an axial height of the bent portion, the bent portion includes a plurality of uncoated portion flags arranged along a radial direction of the electrode assembly, and wherein the plurality of uncoated portion flags overlap along the axial direction to define a bending surface region along the radial direction of the electrode assembly;
(b) a battery housing having an open end and a closed portion opposite to the open end so that the electrode assembly is accommodated through the open end, the battery housing being electrically connected to the negative electrode;
(c) a sealing body configured to seal the open end of the battery housing;
(d) a terminal electrically connected to the positive electrode and having a surface exposed outside the battery housing; and
(e) a current collecting plate welded to the bending surface region and electrically connected to any one of the battery housing and the terminal.

40. The cylindrical battery according to claim 39,
wherein the terminal is a rivet terminal installed in a perforated hole in the closed portion of the battery housing, and
wherein an insulating gasket is interposed between the rivet terminal and the perforated hole.

41. The cylindrical battery according to claim 40,
wherein the rivet terminal is welded to the current collecting plate.

42. The cylindrical battery according to claim 41,
wherein the current collecting plate includes:
a support portion having a hole;
at least one leg portion extending along a radial direction from the support portion and welded to the bending surface region;
a connection portion provided inside the hole; and
a bridge portion configured to connect the support portion and the connection portion.

43. The cylindrical battery according to claim 39, further comprising:
a crimping portion formed by bending the open end of the battery housing toward the core,
wherein the sealing body includes a cap configured to cover the open end of the battery housing and a sealing gasket interposed between the cap and the open end, and
wherein the crimping portion compresses the sealing gasket toward an edge of the cap.

44. The cylindrical battery according to claim 43, further comprising:
a beading portion located in a region adjacent to the open end of the battery housing,
wherein at least a part of an edge of the current collecting plate is interposed between an inner surface of the beading portion and the sealing gasket and coupled to the inner surface of the beading portion.

45. The cylindrical battery according to claim 44,
wherein at least a part of the edge of the current collecting plate is welded to the inner surface of the beading portion.

46. The cylindrical battery according to claim 44,
wherein the current collecting plate includes:
a support portion;
at least one leg portion extending along a radial direction from the support portion and welded to the bending surface region; and
a housing connection portion extending from the support portion or the leg portion toward the beading portion and coupled to the inner surface of the beading portion.

47. The cylindrical battery according to claim 43,
wherein the cap corresponds to the terminal, and
wherein the current collecting plate includes:
a support portion;
at least one leg portion extending outward from the support portion and welded to the bending surface region; and
a lead portion extending from the support portion or the leg portion and coupled to the cap.

48. A battery pack, comprising the cylindrical battery according to any one of claims 39 to 47.

49. A vehicle, comprising the battery pack according to claim 48.
